# EUROPEAN PATENT APPLICATION

(11) **EP 4 582 933 A1**
(43) Date of publication of application: **09.07.2025**
(21) Application number: 23869859.1
(22) Date of filing: 30.06.2023
(51) Int. Cl.: G06F 8/656

(54) **APPLICATION PROGRAM UPDATING METHOD AND APPARATUS, DEVICE, AND COMPUTER READABLE STORAGE MEDIUM**

(30) Priority: 26.09.2022 CN 202211175486
(71) Applicant: Huawei Technologies Co., Ltd., Shenzhen, Guangdong 518129 (CN)
(72) Inventor: XIAO, Weidong, Shenzhen, Guangdong 518129 (CN); LI, Guo, Shenzhen, Guangdong 518129 (CN); ZHANG, Shan, Shenzhen, Guangdong 518129 (CN)
(74) Representative: Goddar, Heinz J.
(86) International application number: PCT/CN2023/104852
(87) International publication number: WO 2024/066611

(57) **Abstract**

This application discloses an application update method, apparatus, and device, and a computer-readable storage medium, and belongs to the field of computer technologies. In the method, first code and first metadata that are run by an application before updating and second code and second metadata that need to be run by the application after updating are first obtained. The first metadata indicates attribute information of a first global variable referenced when the first code is run, and the second metadata indicates attribute information of a second global variable referenced when the second code is run. Then, the second global variable is acquired based on the attribute information of the first global variable and the attribute information of the second global variable. Next, switching from running the first code to running the second code is performed based on the second global variable. In this way, the application can be updated. In this application, the second global variable can be automatically determined. This not only shortens time consumed for updating the application, but also implements hot updating without restarting the application.

## Description

This application claims priority to Chinese Patent Application No. 202211175486.3, filed on September 26, 2022 and entitled "APPLICATION UPDATE METHOD, APPARATUS, AND DEVICE, AND COMPUTER-READABLE STORAGE MEDIUM", which is incorporated herein by reference in its entirety.

### TECHNICAL FIELD

This application relates to the field of computer technologies, and in particular, to an application update method, apparatus, and device, and a computer-readable storage medium.

### BACKGROUND

In a computer device, an application is installed, and the application may run code. The code that is run by the application is switched, so that the application can be updated, and the application meets various service requirements.

### SUMMARY

This application provides an application update method, apparatus, and device, and a computer-readable storage medium, to update an application. The technical solutions provided in this application include the following aspects.

According to a first aspect, an application update method is provided. In the method, first code and first metadata that are run by an application before updating and second code and second metadata that need to be run by the application after updating are first obtained. The first metadata indicates attribute information of a first global variable referenced when the first code is run, and the second metadata indicates attribute information of a second global variable referenced when the second code is run. Then, the second global variable is acquired based on the attribute information of the first global variable and the attribute information of the second global variable. Next, switching from running the first code to running the second code is performed based on the second global variable.

In this application, the attribute information of the first global variable may be obtained based on the first metadata, and the attribute information of the second global variable may be obtained based on the second metadata, so that the second global variable can be automatically acquired based on the attribute information of the first global variable and the attribute information of the second global variable. Then, switching from running the first code to running the second code can be performed based on the acquired second global variable, to update the application.

Because the second global variable needs to be referenced when the second code is run, and the second global variable has been acquired in this application, the second code can be run without restarting the application. That is, the application can be updated without restarting the application. This type of update belongs to hot updating. In addition, in this application, the second global variable is automatically acquired, and time consumed for acquiring the second global variable is short. Therefore, time consumed for updating the application is also shortened, thereby implementing quick update of the application. It can be learned that in this application, quick hot updating can be performed on the application.

In a possible implementation, the attribute information of the first global variable includes a type and a name of the first global variable, and the attribute information of the second global variable includes a type and a name of the second global variable; and that the second global variable is acquired based on the attribute information of the first global variable and the attribute information of the second global variable includes: when the first global variable and the second global variable have a same type and name, the second global variable is acquired based on the first global variable.

If the first global variable and the second global variable have the same type and name, it indicates that the first global variable and the second global variable belong to a same global variable. Therefore, the second global variable may be acquired based on the first global variable. This ensures accuracy of the acquired second global variable.

In a possible implementation, the first metadata includes a first pointer group, the first pointer group includes a first global variable type pointer and a first global variable name pointer, the second metadata includes a second pointer group, and the second pointer group includes a second global variable type pointer and a second global variable name pointer; and before that the second global variable is acquired based on the attribute information of the first global variable and the attribute information of the second global variable, the method further includes: obtaining the type of the first global variable based on the first global variable type pointer in the first pointer group; obtaining the name of the first global variable based on the first global variable name pointer in the first pointer group, where the attribute information of the first global variable includes the type and the name of the first global variable; obtaining the type of the second global variable based on the second global variable type pointer in the second pointer group; and obtaining the name of the second global variable based on the second global variable name pointer in the second pointer group, where the attribute information of the second global variable includes the type and the name of the second global variable.

In this application, the type and the name of the first global variable and the type and the name of the second global variable are obtained by using the first pointer group included in the first metadata and the second pointer group included in the second metadata.

In a possible implementation, the type of the first global variable and the type of the second global variable are basic types; and that the second global variable is acquired based on the first global variable includes: the first global variable is used as the second global variable.

If the type of the first global variable and the type of the second global variable are both the basic types, it indicates that both the first global variable and the second global variable are values, and the first global variable is directly used as the second global variable.

In a possible implementation, the first pointer group further includes a first global variable address pointer, and the second pointer group further includes a second global variable address pointer; and that the first global variable is used as the second global variable includes: a target heap memory pointer is obtained based on the first global variable address pointer, where the target heap memory pointer is used to obtain the first global variable; and the second global variable address pointer is enabled to indicate the target heap memory pointer.

Because the second global variable address pointer is enabled to indicate the target heap memory pointer, the target heap memory pointer may be obtained based on the second global variable pointer. The target heap memory pointer indicates an address of the first global variable in a heap memory. Therefore, the first global variable may also be obtained based on the target heap memory pointer. This is equivalent to that the first global variable is used as the second global variable. In this manner, the target heap memory pointer is directly reused. This shortens time consumed for acquiring the second global variable. In addition, no additional pointer needs to be generated, and no additional heap memory needs to be occupied.

In a possible implementation, the type of the first global variable and the type of the second global variable are reference types; and that the second global variable is acquired based on the first global variable includes: when a first member variable is completely the same as a second member variable, the first global variable is updated based on the second metadata, to acquire an updated first global variable, where the first member variable is a member variable corresponding to the first global variable, and the second member variable is a member variable corresponding to the second global variable; and the updated first global variable is used as the second global variable.

When the first member variable corresponding to the first global variable is completely the same as the second member variable corresponding to the second global variable, it indicates that a layout of the first global variable is the same as a layout of the second global variable, and the layout of the global variable is represented by using the member variable. Because both the type of the first global variable and the type of the second global variable are reference types, it indicates that both the first global variable and the second global variable are objects. In this case, the first global variable needs to be updated based on the second metadata, and the updated first global variable acquired after being updated is used as the second global variable.

In a possible implementation, the first pointer group includes a first global variable address pointer, the first metadata includes a third pointer group, the second pointer group includes a second global variable address pointer, and the second metadata includes a fourth pointer group; that the first global variable is updated based on the second metadata, to acquire an updated first global variable includes: a target heap memory pointer is obtained based on the first global variable address pointer; the first global variable is obtained based on the target heap memory pointer; and a head pointer included in the first global variable is enabled to update from indicating the third pointer group to indicating the fourth pointer group; and that the updated first global variable is used as the second global variable includes: the second global variable address pointer is enabled to indicate the target heap memory pointer.

Both the first global variable and the second global variable are objects, the object has an object header, and the object header includes a head pointer. Updating the first global variable based on the second metadata is updating the head pointer included in the first global variable from pointing to the third pointer group to pointing to the fourth pointer group. In addition, because the second global variable address pointer is enabled to indicate the target heap memory pointer, the target heap memory pointer may be obtained based on the second global variable pointer. The target heap memory pointer indicates an address of the updated first global variable in a heap memory. Therefore, the updated first global variable may also be obtained based on the target heap memory pointer. This is equivalent to that the updated first global variable is used as the second global variable. In this manner, only the first global variable needs to be simply updated, so that the target heap memory pointer can be directly reused. This shortens time consumed for acquiring the second global variable. In addition, no additional pointer needs to be generated, and no additional heap memory needs to be occupied.

In a possible implementation, the type of the first global variable and the type of the second global variable are reference types; and that the second global variable is acquired based on the first global variable includes: when a first member variable is partially the same as a second member variable, a third global variable generated based on the second metadata, where the first member variable is a member variable corresponding to the first global variable, the second member variable is a member variable corresponding to the second global variable, a head pointer included in the third global variable indicates a fourth pointer group included in the second metadata, and the third global variable further includes initial instance data of the second member variable; initial instance data of a target member variable included in the third global variable is updated based on instance data of the target member variable included in the first global variable, to acquire an updated third global variable, where the target member variable is a same member variable in the first member variable and the second member variable; and the updated third global variable is used as the second global variable.

Because the first member variable and the second member variable are partially the same, and are not completely the same, it indicates that a layout of the first global variable is different from a layout of the second global variable. Therefore, the first global variable cannot be simply updated. Instead, the second metadata needs to be fully used to generate a new third global variable, the third global variable is updated based on the first global variable, and the updated third global variable is used as the second global variable.

In a possible implementation, the first metadata includes the third pointer group, the third pointer group includes a first parent-type pointer and a first member variable pointer, the second metadata includes the fourth pointer group, and the fourth pointer group includes a second parent-type pointer and a second member variable pointer; and the method further includes: obtaining a type and a name of the first member variable based on the first parent-type pointer and the first member variable pointer in the third pointer group; obtaining a type and a name of the second member variable based on the second parent-type pointer and the second member variable pointer in the fourth pointer group; and determining, based on the type and the name of the first member variable and the type and the name of the second member variable, that the first member variable is completely or partially the same as the second member variable.

In this application, the type and the name of the first member variable and the type and the name of the second member variable may be determined by using the third pointer group included in the first metadata and the fourth pointer group included in the second metadata. Therefore, it may be determined, based on the type and the name of the first member variable and the type and the name of the second member variable, whether the first member variable is partially or completely the same as the second member variable. Member variables having a same type and name are considered as corresponding member variables. If the first member variable may be in one-to-one correspondence with the second member variable, it indicates that the first member variable is completely the same as the second member variable. If the first member variable cannot be in one-to-one correspondence with the second member variable, it indicates that the first member variable is partially the same as the second member variable.

In a possible implementation, that initial instance data of a target member variable included in the third global variable is updated based on instance data of the target member variable included in the first global variable, to acquire an updated third global variable includes: when a first condition is met, the initial instance data of the target member variable included in the third global variable is updated to the instance data of the target member variable included in the first global variable, where the first condition includes: a type of the first member variable and a type of the second member variable are basic types; or a type of the first member variable and a type of the second member variable are reference types, a first sub member variable is completely the same as a second sub member variable, the first sub member variable is a sub member variable of the target member variable included in the first member variable, and the second sub member variable is a sub member variable of the target member variable included in the second member variable.

If both the first member variable and the second member variable are values, or both the first member variable and the second member variable are objects, but for a same target member variable in the first member variable and the second member variable, a layout of the target member variable does not change, the initial instance data of the target member variable may be updated to the instance data of the target member variable in the third global variable, to acquire the updated third global variable. The layout of the target member variable is represented by using the sub member variable. Because the first sub member variable of the target member variable included in the first member variable is completely the same as the second sub member variable of the target member variable included in the second member variable, it indicates that the layout of the target member variable does not change.

In a possible implementation, that initial instance data of a target member variable included in the third global variable is updated based on instance data of the target member variable included in the first global variable, to acquire an updated third global variable includes: when a second condition is met, initial sub instance data, of a target sub member variable, included in the initial instance data of the target member variable is updated to sub instance data, of the target sub member variable, included in the instance data of the target member variable, where the second condition includes: a type of the first member variable and a type of the second member variable are reference types, and the first sub member variable is partially the same as the second sub member variable. In addition, the target sub member variable is a same sub member variable in the first sub member variable and the second sub member variable, the first sub member variable is a sub member variable of the target member variable included in the first member variable, and the second sub member variable is a sub member variable of the target member variable included in the second member variable.

In this implementation, because the first sub member variable is partially the same as the second sub member variable, it indicates that the layout of the target member variable changes, and the same target sub member variable in the first sub member variable and the second sub member variable needs to be determined. The third global variable includes the initial instance data of the target member variable, the initial instance data of the target member variable further includes initial sub instance data of each second sub member variable, and the target sub member variable belongs to the second sub member variable. Therefore, the initial instance data of the target member variable includes the initial sub instance data of the target sub member variable. Similarly, the first global variable includes the instance data of the target member variable, and the instance data of the target member variable further includes sub instance data of the target sub member variable. Therefore, the initial sub instance data of the target sub member variable may be replaced with the sub instance data of the target sub member variable, to acquire the updated third global variable.

In a possible implementation, that the updated third global variable is used as the second global variable includes: a second global variable address pointer is enabled to indicate a reference heap memory pointer, where the reference heap memory pointer is used to obtain the updated third global variable.

Because the second global variable address pointer is enabled to indicate the reference heap memory pointer, and the updated third global variable may be obtained based on the reference heap memory pointer, it is equivalent to that the updated third global variable is used as the second global variable, to ensure that the second global variable can be normally referenced based on the second global address pointer when the second code is run.

In a possible implementation, the method further includes: when there is third code referencing a first symbol included in the first code, modifying a pointer, of the first symbol, that is recorded in a global offset (global offset table, GOT) table corresponding to the third code to a pointer of a second symbol included in the second code, where the first symbol includes the first global variable, the second symbol includes the second global variable, and the first global variable and the second global variable have a same type and name; and/or the first symbol includes a first function, the second symbol includes a second function, and the first function and the second function are a same function.

Therefore, the first symbol and the second symbol belong to a same symbol. Because the pointer of the first symbol is modified to the pointer of the second symbol, the third code may no longer reference the first symbol, but reference the second symbol that is the same as the first symbol. That is, dependency of the third code on old first code is removed, so that the third code re-depends on new second code.

In a possible implementation, the method further includes: deleting the first global variable that does not need to be used after the second global variable is acquired, and/or deleting the first code and the first metadata.

After the first global variable, the first code, and the first metadata that do not need to be used are deleted, the memory occupied by the first global variable, the first code, and the first metadata that do not need to be used can be released, thereby avoiding a memory waste.

According to a second aspect, an application update apparatus is provided. The apparatus includes:
an obtaining module, configured to obtain first code and first metadata that are run by an application before updating, where the first metadata indicates attribute information of a first global variable referenced when the first code is run, where
the obtaining module is further configured to obtain second code and second metadata that need to be run by the application after updating, where the second metadata indicates attribute information of a second global variable referenced when the second code is run;
an acquiring module, configured to acquire the second global variable based on the attribute information of the first global variable and the attribute information of the second global variable; and
a switching module, configured to switch, based on the second global variable, from running the first code to running the second code.

In a possible implementation, the attribute information of the first global variable includes a type and a name of the first global variable, and the attribute information of the second global variable includes a type and a name of the second global variable; and the acquiring module is configured to: when the first global variable and the second global variable have a same type and name, acquire the second global variable based on the first global variable.

In a possible implementation, the first metadata includes a first pointer group, the first pointer group includes a first global variable type pointer and a first global variable name pointer, the second metadata includes a second pointer group, and the second pointer group includes a second global variable type pointer and a second global variable name pointer; and the obtaining module is further configured to: obtain the type of the first global variable based on the first global variable type pointer in the first pointer group; obtain the name of the first global variable based on the first global variable name pointer in the first pointer group, where the attribute information of the first global variable includes the type and the name of the first global variable; obtain the type of the second global variable based on the second global variable type pointer in the second pointer group; and obtain the name of the second global variable based on the second global variable name pointer in the second pointer group, where the attribute information of the second global variable includes the type and the name of the second global variable.

In a possible implementation, the type of the first global variable and the type of the second global variable are basic types; and the acquiring module is configured to use the first global variable as the second global variable.

In a possible implementation, the first pointer group further includes a first global variable address pointer, and the second pointer group further includes a second global variable address pointer; and the acquiring module is configured to: obtain a target heap memory pointer based on the first global variable address pointer, where the target heap memory pointer is used to obtain the first global variable; and enable the second global variable address pointer to indicate the target heap memory pointer.

In a possible implementation, the type of the first global variable and the type of the second global variable are reference types; and the acquiring module is configured to: when a first member variable is completely the same as a second member variable, update the first global variable based on the second metadata, to acquire an updated first global variable, where the first member variable is a member variable corresponding to the first global variable, and the second member variable is a member variable corresponding to the second global variable; and use the updated first global variable as the second global variable.

In a possible implementation, the first pointer group includes a first global variable address pointer, the first metadata includes a third pointer group, the second pointer group includes a second global variable address pointer, and the second metadata includes a fourth pointer group; and the acquiring module is configured to: obtain a target heap memory pointer based on the first global variable address pointer; obtain the first global variable based on the target heap memory pointer; enable a head pointer included in the first global variable to update from indicating the third pointer group to indicating the fourth pointer group; and enable the second global variable address pointer to indicate the target heap memory pointer.

In a possible implementation, the type of the first global variable and the type of the second global variable are reference types; and the acquiring module is configured to: when a first member variable is partially the same as a second member variable, generate a third global variable based on the second metadata, where the first member variable is a member variable corresponding to the first global variable, the second member variable is a member variable corresponding to the second global variable, a head pointer included in the third global variable indicates a fourth pointer group included in the second metadata, and the third global variable further includes initial instance data of the second member variable; update, based on instance data of a target member variable included in the first global variable, initial instance data of the target member variable included in the third global variable, to acquire an updated third global variable, where the target member variable is a same member variable in the first member variable and the second member variable; and use the updated third global variable as the second global variable.

In a possible implementation, the first metadata includes the third pointer group, the third pointer group includes a first parent-type pointer and a first member variable pointer, the second metadata includes the fourth pointer group, and the fourth pointer group includes a second parent-type pointer and a second member variable pointer; and the obtaining module is further configured to: obtain a type and a name of the first member variable based on the first parent-type pointer and the first member variable pointer in the third pointer group; obtain a type and a name of the second member variable based on the second parent-type pointer and the second member variable pointer in the fourth pointer group; and determine, based on the type and the name of the first member variable and the type and the name of the second member variable, that the first member variable is completely or partially the same as the second member variable.

In a possible implementation, the acquiring module is configured to: when a first condition is met, update the initial instance data of the target member variable included in the third global variable to the instance data of the target member variable included in the first global variable, where the first condition includes: a type of the first member variable and a type of the second member variable are basic types; or a type of the first member variable and a type of the second member variable are reference types, a first sub member variable is completely the same as a second sub member variable, the first sub member variable is a sub member variable of the target member variable included in the first member variable, and the second sub member variable is a sub member variable of the target member variable included in the second member variable.

In a possible implementation, the acquiring module is configured to: when a second condition is met, update initial sub instance data, of a target sub member variable, included in the initial instance data of the target member variable to sub instance data, of the target sub member variable, included in the instance data of the target member variable, where the target sub member variable is a same sub member variable in a first sub member variable and a second sub member variable, the first sub member variable is a sub member variable of the target member variable included in the first member variable, and the second sub member variable is a sub member variable of the target member variable included in the second member variable; and the second condition includes: a type of the first member variable and a type of the second member variable are reference types, and the first sub member variable is partially the same as the second sub member variable.

In a possible implementation, the acquiring module is configured to enable a second global variable address pointer to indicate a reference heap memory pointer, where the reference heap memory pointer is used to obtain the updated third global variable.

In a possible implementation, the apparatus further includes: a modification module, configured to: when there is third code referencing a first symbol included in the first code, modify a pointer, of the first symbol, that is recorded in a global offset GOT table corresponding to the third code to a pointer of a second symbol included in the second code, where the first symbol includes the first global variable, the second symbol includes the second global variable, and the first global variable and the second global variable have a same type and name; and/or the first symbol includes a first function, the second symbol includes a second function, and the first function and the second function are a same function.

In a possible implementation, the apparatus further includes: a deletion module, configured to delete the first global variable that does not need to be used after the second global variable is acquired, and/or delete the first code and the first metadata.

According to a third aspect, an application update device is provided. The device includes a memory and a processor. The memory stores at least one instruction, and the at least one instruction is loaded and executed by the processor, so that the application update device implements the application update method provided in the first aspect and the corresponding possible implementations of the first aspect.

Optionally, there are one or more processors, and there are one or more memories.

Optionally, the memory and the processor may be integrated together, or the memory and the processor may be separately disposed.

According to a fourth aspect, a computer-readable storage medium is provided. The computer-readable storage medium stores at least one instruction, and the instruction is loaded and executed by a processor, to implement the application update method provided in the first aspect and the corresponding possible implementations of the first aspect.

According to a fifth aspect, a computer program product is provided. The computer program product includes a computer program/instructions, and the computer program/the instructions are executed by a processor, so that a computer implements the application update method provided in the first aspect and the corresponding possible implementations of the first aspect.

According to a sixth aspect, a chip is provided. The chip includes a processor, configured to invoke, from a memory, instructions stored in the memory, and run the instructions, so that a computer in which the chip is installed performs the application update method provided in the first aspect and the corresponding possible implementations of the first aspect.

According to a seventh aspect, another chip is provided. The chip includes an input interface, an output interface, a processor, and a memory. The input interface, the output interface, the processor, and the memory are connected through an internal connection path. The processor is configured to execute code in the memory. When the code is executed, a computer in which the chip is installed performs the application update method provided in the first aspect and the corresponding possible implementations of the first aspect.

It should be understood that, for beneficial effect achieved by the technical solutions of the second aspect to the seventh aspect and the corresponding possible implementations of the technical solutions of the second aspect to the seventh aspect of this application, refer to the technical effect of the first aspect and the corresponding possible implementations of the first aspect. Details are not described herein again.

### BRIEF DESCRIPTION OF DRAWINGS

FIG. 1 is a diagram of a structure of an object according to an embodiment of this application;
FIG. 2 is a diagram of one type of metadata according to an embodiment of this application;
FIG. 3 is a diagram of another type of metadata according to an embodiment of this application;
FIG. 4 is a diagram of still another type of metadata according to an embodiment of this application;
FIG. 5 is a diagram of yet another type of metadata according to an embodiment of this application;
FIG. 6 is a diagram of still yet another type of metadata according to an embodiment of this application;
FIG. 7 is a flowchart of an application update method according to an embodiment of this application;
FIG. 8 is a flowchart of obtaining a first global variable according to an embodiment of this application;
FIG. 9A and FIG. 9B are a flowchart of acquiring a second global variable based on a first global variable according to an embodiment of this application;
FIG. 10 is another flowchart of obtaining a first global variable according to an embodiment of this application;
FIG. 11 is a flowchart of modifying a pointer of a symbol according to an embodiment of this application;
FIG. 12 is a diagram of an implementation scenario according to an embodiment of this application;
FIG. 13 is a diagram of another implementation scenario according to an embodiment of this application;
FIG. 14 is a flowchart of acquiring a second shared library according to an embodiment of this application;
FIG. 15 is a flowchart of loading and internal linking according to an embodiment of this application;
FIG. 16 is a flowchart of deletion according to an embodiment of this application;
FIG. 17 is a diagram of still another implementation scenario according to an embodiment of this application;
FIG. 18 is a diagram of a related technology 1 according to an embodiment of this application;
FIG. 19 is a diagram of a related technology 2 according to an embodiment of this application;
FIG. 20 is a diagram of an application update apparatus according to an embodiment of this application; and
FIG. 21 is a diagram of an application update device according to an embodiment of this application.

### DESCRIPTION OF EMBODIMENTS

Terms used in embodiments of this application are only used to explain specific embodiments of this application, but are not intended to limit this application.

Embodiments of this application provide an application update method. The application update method may be applied to a computer device. The computer device is, for example, a terminal. This is not limited herein. In a development phase of an application, a developer may need to debug the application, and the computer device updates the application by performing the method, to debug the application. In a use phase of the application, the developer may need to repair a problem existing in the application, or optimize the application. The optimization is, for example, adding a function that can be provided by the application. The computer device updates the application by performing the method, to repair or optimize the application. For the use phase of the application, the computer device may perform the method when receiving an instruction of a server.

Before the method provided in embodiments of this application is described, terms related to the method provided in embodiments of this application are first described.

Application: belongs to a type of software, and is also referred to as application software. The application includes a main (main) file. When the main file is executed, a shared library needs to be run, that is, the shared library needs to be referenced. The application has a corresponding process.

Shared library: includes code and metadata. Code can be acquired by compiling source code into a target high-level language. The target high-level language is any machine language that can be identified and executed by the computer device. This is not limited herein. A function, a constant, and a global variable recorded in the code need to be referenced when the code is run. The metadata may be acquired by collecting attribute information of the global variable, and the metadata indicates the attribute information of the global variable. Both the code and the metadata included in the shared library belong to binary files. In Linux (an operating system), a suffix of the binary file is .so. Before the application references the shared library, the shared library needs to be loaded to a memory, that is, the shared library occupies one memory.

Global variable: A type of the global variable includes a basic type and a reference type. When the type of the global variable is a basic type, the global variable is a value. When the type of the global variable is a reference type, the global variable is an object. An object belongs to an instance of a type, and the type includes at least one member variable. The type may have a parent type, and the parent type may also include at least one member variable. The type of the member variable may also include a basic type and a reference type. Details are not described herein.

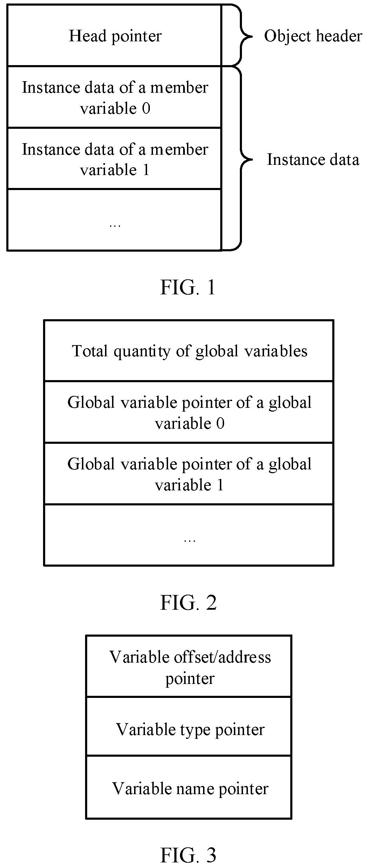

Refer to FIG. 1. An object includes an object header and instance data, and the instance data includes instance data of a member variable corresponding to the object (namely, a global variable), for example, instance data of a member variable 0 or instance data of a member variable 1. When the type of the member variable is a basic type, the instance data of the member variable is a value. When the type of the member variable is a reference type, the instance data of the member variable is an object. In embodiments of this application, a member variable corresponding to an object includes but is not limited to: a member variable included in a type corresponding to the object, and a member variable included in a parent type of the type corresponding to the object. It should be understood that a specific type of instance to which the object belongs is a type corresponding to the object.

Metadata: As described above, the metadata indicates the attribute information of the global variable. The metadata is described with reference to FIG. 2 to FIG. 6.

Refer to FIG. 2. FIG. 2 is an entry of metadata, and each shared library corresponds to one FIG. 2. FIG. 2 includes at least one global variable pointer, for example, a global variable pointer of a global variable 0 or a global variable pointer of a global variable 1. Each global variable referenced by code included in a shared library corresponds to one global variable pointer. The global variable pointer indicates a segment of address in the memory, and the segment of address is used to store FIG. 3 corresponding to the global variable. Therefore, FIG. 3 corresponding to the global variable may be determined based on the global variable pointer. For example, FIG. 2 may further include a total quantity of global variables.

Refer to FIG. 3. Each variable corresponds to one FIG. 3. The variable may be the foregoing global variable or a member variable. FIG. 3 includes a variable type pointer, a variable name pointer, and a variable offset/address pointer. The variable type pointer indicates a segment of address in a memory, and the segment of address is used to store a type of the variable, namely, a basic type or a reference type. Therefore, the type of the variable may be obtained based on the variable type pointer. The variable name pointer indicates a segment of address in the memory, and the segment of address is used to store a name of the variable. Therefore, the name of the variable may be obtained based on the variable name pointer.

When the variable is a global variable, the variable offset/address pointer is a variable address pointer. The variable address pointer indicates a segment of address in the memory, and the segment of address is used to store a heap memory pointer. Therefore, the heap memory pointer may be obtained based on the variable address pointer. The heap memory pointer indicates a segment of address in a heap memory. When the type of the global variable is a basic type, because the global variable is a value, a segment of address in the heap memory is used to store a value. When the type of the global variable is a reference type, because the global variable is an object, a segment of address in the heap memory is used to store an object. It can be learned that the global variable may be obtained based on the heap memory pointer, and the global variable is a value or an object. The heap memory belongs to the memory, but the heap memory is different from the memory occupied by the shared library. That is, a whole memory is divided into two parts. One part of the memory is occupied by the shared library, and the other part of the memory is used as the heap memory.

Alternatively, when the variable is a member variable, the variable offset/address pointer is a variable offset pointer, the variable offset pointer indicates a segment of address in the memory, the segment of address is used to store an offset value, and the offset value represents an offset of instance data of the member variable in the object. The instance data of the member variable may be obtained from the object based on the offset value. Therefore, the instance data of the member variable may be obtained based on the variable offset pointer.

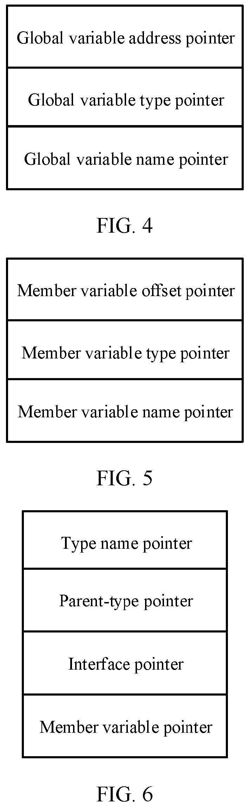

For example, FIG. 3 may be further divided into FIG. 4 and FIG. 5 based on the foregoing descriptions. FIG. 4 corresponds to a case in which the variable is a global variable. FIG. 4 includes a global variable address pointer, a global variable type pointer, and a global variable name pointer. FIG. 5 corresponds to a case in which the variable is a member variable. FIG. 5 includes a member variable offset pointer, a member variable type pointer, and a member variable name pointer. For the pointers included in FIG. 4 and FIG. 5, refer to the descriptions corresponding to FIG. 3. Details are not described herein.

Refer to FIG. 6. A type corresponding to each object corresponds to one FIG. 6. It can be learned from the foregoing descriptions that the object includes an object header. As shown in FIG. 1, it can be learned that the object header includes a head pointer, the head pointer indicates a segment of address in a memory, and the segment of address is used to store FIG. 6 corresponding to a type corresponding to the object. Therefore, FIG. 6 corresponding to the type corresponding to the object may be located from the metadata based on the head pointer included in the object header.

FIG. 6 includes a type name pointer, a member variable pointer, and a parent-type pointer. The type name pointer indicates a segment of address in the memory, and the segment of address is used to store a name of the type. Therefore, the name of the type may be obtained based on the type name pointer. Each member variable included in the type corresponds to one member variable pointer. The member variable pointer indicates a segment of address in the memory, and the segment of address is used to store FIG. 5 corresponding to the member variable. Therefore, FIG. 5 corresponding to the member variable included in the type may be obtained based on the member variable pointer. Further, the instance data of the member variable included in the type, the type of the member variable included in the type, and the name of the member variable included in the type may be obtained based on the pointers included in FIG. 5.

A parent-type pointer indicates a segment of address in the memory. The segment of address is used to store FIG. 6 corresponding to a parent type. Therefore, FIG. 6 corresponding to the parent type of the type may be determined based on the parent-type pointer. FIG. 6 corresponding to the parent type may also include a type name pointer, a member variable pointer, and a parent-type pointer. In FIG. 6 corresponding to the parent type, a name of the parent type may be obtained based on the type name pointer, and FIG. 5 corresponding to the member variable included in the parent type may be determined based on the member variable pointer. Therefore, instance data of the member variable included in the parent type, a type of the member variable included in the parent type, and a name of the member variable included in the parent type may be obtained based on the pointers included in FIG. 5, and FIG. 6 corresponding to a parent type of the parent type may be further determined based on the parent-type pointer.

For a type, the instance data, the type, and the name of the member variable included in the type may be obtained based on FIG. 6 corresponding to the type, and tracing may also be performed based on FIG. 6 corresponding to the type, to obtain instance data, types, and names of member variables included in all parent types of the type. All the parent types of the type include but are not limited to a parent type of the type, a parent type of the parent type of the type, and the like.

For example, FIG. 6 may further include an interface pointer, the interface pointer indicates a segment of address in the memory, and the segment of address is used to store an interface of the type to which the object belongs. An interface is a concept parallel to a parent type. One type can have only one parent type, but one type can have a plurality of interfaces.

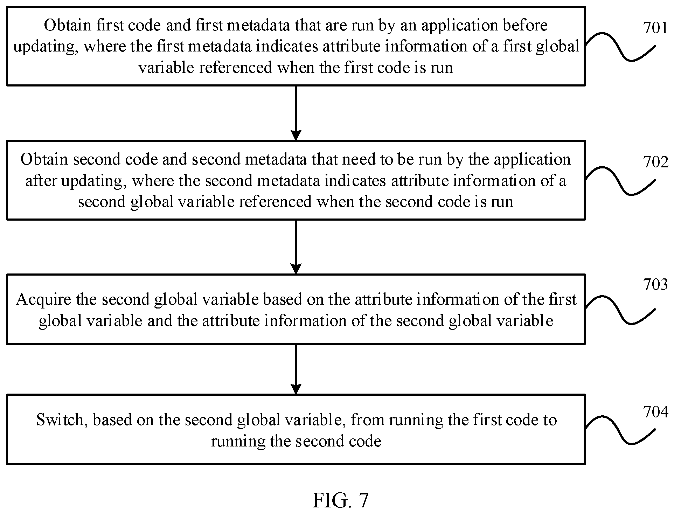

Based on the foregoing described terms, embodiments of this application provide an application update method. The method may be applied to a computer device. As shown in FIG. 7, the method includes step 701 to step 704 below.

Step 701: Obtain first code and first metadata that are run by an application before updating, where the first metadata indicates attribute information of a first global variable referenced when the first code is run.

The first code and the first metadata are located in a first shared library, and the first shared library is an old shared library that is run before the application is updated, or is referenced. In some implementations, after obtaining old-version source code, the computer device collects the attribute information of the first global variable based on the old-version source code, and generates the first metadata indicating the attribute information of the first global variable. In addition, the computer device compiles the old-version source code into a target high-level language, to acquire the first code, and the first global variable needs to be referenced when the first code is run. In some other implementations, the computer device may directly obtain the first code and the first metadata without generating and compiling the first code and the first metadata. For the first metadata and the attribute information of the first global variable, refer to the following descriptions. Details are not described herein.

For example, the computer device may receive old-version source code sent by a server, or obtain old-version source code input by a developer. In an example embodiment, regardless of how the computer device obtains the old-version source code, after obtaining the old-version source code, the computer device may check whether there is an error, for example, a syntax error, in the old-version source code. If there is no error, the computer device may compile the old-version source code to obtain the first code. If there is an error, the computer device may perform error correction on the old-version source code, and then compile source code obtained after the error correction, to acquire the first code. The error correction process may be performed by the computer device, or may be performed by the computer device by prompting the developer. In addition, for a case in which the computer device directly obtains the first code and the first metadata, the first code and the first metadata may alternatively be directly sent by the server, or may be directly input by the developer.

When a type of the first global variable is a basic type, the first global variable is a value. When the type of the first global variable is a reference type, the first global variable is an object. The object is an instance of a type, the type may have a parent type, and the type and the parent type each may include at least one member variable, namely, a first member variable corresponding to the first global variable. A type of the first member variable may be a basic type or a reference type. A first member variable of a basic type is a value, and a first member variable of a reference type is an object. The object is also an instance of a type. The type may also have a parent type, and the type and the parent type each may also include at least one sub member variable, namely, a first sub member variable corresponding to the first member variable. A type of the first sub member variable may also be a basic type or a reference type. A sequence of global variables, member variables, sub member variables, and lower-layer member variables can be deduced by analogy until types of bottom-layer member variables are all basic types. In other words, the bottom-layer member variables are all values.

It can be learned that, regardless of whether the type of the first global variable is the basic type or the reference type, it may be considered that the first global variable is constituted by values. As described above, the application runs the first code before being updated, and the first global variable needs to be referenced when the first code is run. Before the first code is run, all values constituting the first global variable are initial values, and the initial values may be set according to an actual requirement. This is not limited herein. After the first code starts to be run, with continuous running of the first code, the values constituting the first global variable may also change, so that the values constituting the first global variable are different from the initial values. Certainly, regardless of whether the values constituting the first global variable change, the first metadata indicating the attribute information of the first global variable does not change.

Step 702: Obtain second code and second metadata that need to be run by the application after updating, where the second metadata indicates attribute information of a second global variable referenced when the second code is run.

The second code and the second metadata are located in a second shared library, and the second shared library is a new shared library that needs to be run after the application is updated, or that needs to be referenced. Updating the application is to switch the application from running the old first code to running the new second code. For the first metadata and the attribute information of the first global variable, refer to the following descriptions. Details are not described herein.

For example, the computer device may directly obtain the second code and the second metadata. Alternatively, the computer device obtains new-version source code, collects the attribute information of the second global variable based on the new-version source code, and generates the second metadata indicating the attribute information of the second global variable. In addition, the computer device compiles the new-version source code into a target high-level language, to acquire the second code, and the second global variable needs to be referenced when the second code is run. For a manner of obtaining the new-version source code by the computer device, refer to a manner of obtaining the old-version source code in step 701. For a manner of acquiring the second code by the computer device through compilation, refer to a manner of acquiring the first code through compilation in step 701. Details are not described herein.

When a type of the second global variable is a basic type, the second global variable is a value. When the type of the second global variable is a reference type, the second global variable is an object. The object is an instance of a type, the type may have a parent type, and the type and the parent type each may include at least one member variable, namely, a second member variable corresponding to the second global variable. A type of the second member variable may be a basic type or a reference type. When the second member variable is of a reference type, the second member variable may further include a second sub member variable, a lower-layer member variable, and the like.

After obtaining the second code and the second metadata, the computer device needs to load the second code and the second metadata to a memory, so that the application runs the second code after being updated. For example, the computer device reads the second code and the second metadata from a hard disk, and writes the second code and the second metadata into the memory, to load the second code and the second metadata to the memory. For example, after completing loading, the computer may further need to perform internal linking and external linking.

In some implementations, if a symbol defined by the second code is referenced by the second code, internal symbol linking needs to be performed for the symbol. The internal symbol linking is to determine a correspondence between the symbol and a pointer of the symbol, and the correspondence is used to reference the symbol. In some other implementations, if the second code needs to reference a symbol defined by another shared library, external symbol linking needs to be performed for the symbol. The external symbol linking is also to determine a correspondence between the symbol and a pointer of the symbol, and the correspondence is also used to reference the symbol. However, the pointer of the symbol is provided by another shared library, and the another shared library is also referred to as a shared library on which the second shared library depends. For example, the computer device may store the correspondence in a specified table. For example, the correspondence acquired through the external symbol linking may be stored in a GOT table.

For example, the symbol is a global variable. In this case, the pointer of the symbol is the global variable address pointer shown in FIG. 4. For another example, the symbol is a function. In this case, the pointer of the symbol is a function entry address pointer. The function entry address pointer indicates a segment of address in the memory, and the segment of address is used to store the function.

The foregoing describes a process in which the computer device loads the second code and the second metadata to the memory, and performs internal linking and external linking based on the second code. It should be understood that before the first code is run before the application is updated, the first code and the first metadata are also loaded to the memory, and internal linking and external linking are performed based on the first code. Details are not described herein.

Step 703: Acquire the second global variable based on the attribute information of the first global variable and the attribute information of the second global variable.

It can be learned from the descriptions in step 701 that, after the application runs the first code, the values constituting the first global variable may change, so that the values constituting the first global variable are different from the initial values. Therefore, the second global variable may need to be acquired based on the first global variable, to implement synchronization between the first global variable and the second global variable. Refer to the following descriptions.

Because the first metadata indicates the attribute information of the first global variable, the attribute information of the first global variable may be determined based on the first metadata. Because the second metadata indicates the attribute information of the second global variable, the attribute information of the second global variable may be determined based on the second metadata.

For example, the attribute information of the first global variable includes a type and a name of the first global variable, and the attribute information of the second global variable includes a type and a name of the second global variable. The first metadata includes a first pointer group, the first pointer group includes a first global variable type pointer and a first global variable name pointer, the second metadata includes a second pointer group, and the second pointer group includes a second global variable type pointer and a second global variable name pointer.

Correspondingly, before acquiring the second global variable based on the attribute information of the first global variable and the attribute information of the second global variable, the method provided in this embodiment of this application further includes: obtaining the name of the first global variable based on the first global variable name pointer in the first pointer group; obtaining the type of the first global variable based on the first global variable type pointer in the first pointer group; obtaining the type of the second global variable based on the second global variable type pointer in the second pointer group; and obtaining the name of the second global variable based on the second global variable name pointer in the second pointer group.

Although the first metadata includes the foregoing first pointer group, and the first pointer group is, for example, the pointer group shown in FIG. 4, the computer device may not determine a location of the first pointer group in the first metadata, and therefore needs to locate the first pointer group from the first metadata. The first metadata may further include a first global variable pointer, for example, the global variable pointer shown in FIG. 2, so that the first pointer group may be located from the first metadata based on the first global variable pointer. Correspondingly, the second metadata may further include a second global variable pointer, so that the second pointer group may be located from the second metadata based on the second global variable pointer.

Because the type and the name of the first global variable and the type and the name of the second global variable are obtained, correspondingly, that the second global variable is acquired based on the attribute information of the first global variable and the attribute information of the second global variable includes: When the first global variable and the second global variable have a same type and name, the second global variable is acquired based on the first global variable.

For one second global variable, if there is one first global variable whose type and name are the same as those of the second global variable, it indicates that the second global variable and the first global variable are a same global variable. Therefore, the second global variable may be acquired based on the first global variable. Certainly, if there is no such first global variable, the second global variable does not need to be acquired based on the first global variable, but initial values of the values constituting the second global variable are directly determined.

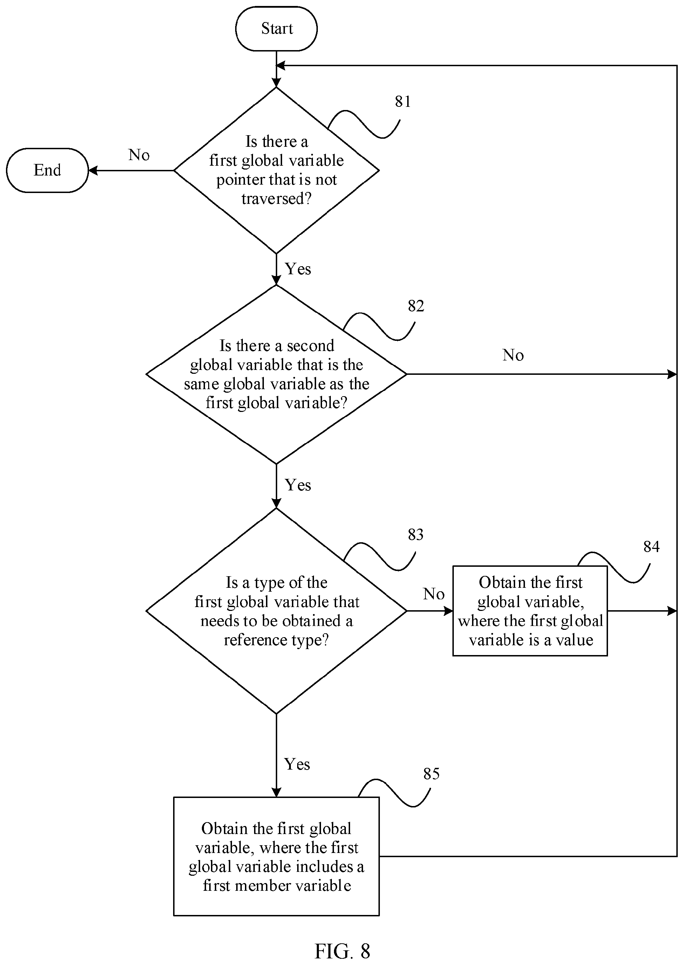

It should be understood that, if the second global variable needs to be acquired based on the first global variable, the first global variable needs to be first obtained, to acquire the second global variable based on the first global variable. For example, FIG. 8 is a flowchart of obtaining the first global variable. Step 81 to step 85 are included.

Step 81: Determine whether there is a first global variable pointer that is not traversed.

It can be learned from the foregoing descriptions that one first pointer group may be located based on each first global variable pointer, so that a type and a name of one first global variable can be determined, and a determining process is completed. The computer device may record, through a counter, a quantity of times of completing the determining process. Each time the determining process is completed, the quantity of times that is recorded by the counter is increased by one. If the quantity of times that is recorded by the counter is the same as a total quantity of global variables that is recorded in the first metadata, it may be determined that all first global variable pointers are traversed, that is, there is no first global variable pointer that is not traversed, and the traversal process may be ended. Alternatively, if the quantity of times that is recorded by the counter is less than the total quantity of global variables that is recorded in the first metadata, it may be determined that not all first global variable pointers are traversed, that is, there is still a first global variable pointer that is not traversed, and step 82 is performed.

Step 82: Determine whether there is a second global variable that is a same global variable as the first global variable.

Each time a type and a name of one first global variable are determined, the second global variable pointer in the second shared library is traversed, the second pointer group is located from the second metadata based on the second global variable pointer, and the type and the name of the second global variable are obtained based on the second pointer group. If the type of the second global variable is the same as the type of the first global variable, and the name of the second global variable is the same as the name of the second global variable, it indicates that there is the second global variable that is the same global variable as the first global variable, and the first global variable is a global variable that needs to be obtained. Subsequently, the second global variable may be acquired based on the first global variable. Therefore, step 83 may continue to be performed. Certainly, if there is no second global variable that is the same global variable as the first global variable, the process may return to step 81.

Step 83: Determine whether the type of the first global variable that needs to be obtained is a reference type.

If the type of the first global variable that needs to be obtained is not a reference type, step 84 continues to be performed. If the type of the first global variable that needs to be obtained is a reference type, step 85 continues to be performed.

Step 84: Obtain the first global variable, where the first global variable is a value.

Because the type of the first global variable is a basic type, the first global variable is a value, and only the first global variable needs to be obtained. After the first global variable is obtained, the process may return to step 81.

Step 85: Obtain the first global variable, where the first global variable includes the first member variable.

Because the type of the first global variable is a reference type, the first global variable is an object, and the obtained first global variable includes the first member variable corresponding to the first global variable. Then, if the type of the first member variable is a basic type, the first member variable is a value. Alternatively, if the type of the first member variable is a reference type, the obtained first member variable is still an object, the first member variable includes the first sub member variable, and so on. Details are not described herein again.

After the first global variable is obtained based on step 81 to step 85 above, the second global variable may be acquired based on the first global variable in the following three cases.

Case 1: If the type of the first global variable and the type of the second global variable are basic types, that the second global variable is acquired based on the first global variable includes: The first global variable is used as the second global variable. Because the type is a basic type, the first global variable is a value, and the second global variable also needs to be a value. The first global variable is directly used as the second global variable.

For example, the first pointer group further includes a first global variable address pointer, and the second pointer group further includes a second global variable address pointer. For the first pointer group and the second pointer group, refer to FIG. 4. Correspondingly, that the first global variable is used as the second global variable includes: A target heap memory pointer is obtained based on the first global variable address pointer, where the target heap memory pointer is used to obtain the first global variable; and the second global variable address pointer is enabled to indicate the target heap memory pointer. Because the second global variable address pointer has been enabled to indicate the target heap memory pointer, the target heap memory pointer may be obtained based on the second global variable address pointer, and the first global variable may be obtained based on the target heap memory pointer, so that the first global variable is used as the second global variable.

Alternatively, a difference from Case 1 above is that the type of the first global variable and the type of the second global variable are reference types. For details, refer to Case 2 and Case 3 below.

Case 2: When the first member variable is completely the same as the second member variable, that the second global variable is acquired based on the first global variable includes: The first global variable is updated based on the second metadata, to acquire an updated first global variable, and the updated first global variable is used as the second global variable. The first member variable is a member variable corresponding to the first global variable, and the second member variable is a member variable corresponding to the second global variable. Case 2 is also referred to as object reuse.

For example, if both the first member variable included in the first global variable and the second member variable included in the second global variable are and are only a member variable 0, a member variable 1, and a member variable 2, it indicates that the first member variable is completely the same as the second member variable. In other words, a layout of the first global variable is the same as a layout of the second global variable, and the layout of the global variable is represented by using the member variable.

For example, whether the first member variable is completely the same as the second member variable may be determined based on the type and the name of the first member variable and the type and the name of the second member variable. For example, all second member variables may be traversed. For each second member variable, if there is one first member variable whose type and name are the same as those of the second member variable, and there is no first member variable other than these first member variables, it indicates that the first member variable is completely the same as the second member variable.

Because the type and the name of the first member variable and the type and the name of the second member variable need to be used, the type and the name of the first member variable and the type and the name of the second member variable need to be obtained. For example, the first metadata includes a third pointer group, the third pointer group includes a first parent-type pointer and a first member variable pointer, the second metadata includes a fourth pointer group, and the fourth pointer group includes a second parent-type pointer and a second member variable pointer. The method further includes: obtaining the type and the name of the first member variable based on the first parent-type pointer and the first member variable pointer in the third pointer group; and obtaining the type and the name of the second member variable based on the second parent-type pointer and the second member variable pointer in the fourth pointer group.

The third pointer group and the fourth pointer group are, for example, pointer groups shown in FIG. 6. For example, the first pointer group may further include a first global variable address pointer, the third pointer group may further include a first-type name pointer, the second pointer group may further include a second global variable address pointer, and the fourth pointer group may further include a second-type name pointer. In this case, a target heap memory pointer is first obtained based on the first global variable address pointer, the first global variable is obtained based on the target heap memory pointer, and a head pointer included in the first global variable indicates the third pointer group. Therefore, the third pointer group may be located from the first metadata based on the head pointer included in the first global variable. Then, the name of the type corresponding to the first global variable may be obtained based on the first-type name pointer in the first pointer group, and the fourth pointer group may be determined based on the name of the type of the first global variable. The name of the type corresponding to the first global variable is the same as the name of the type corresponding to the second global variable that is obtained based on the second-type name pointer in the fourth pointer group. That is, in a determining process, if the name of the type corresponding to the second global variable that is obtained based on the second-type name pointer included in a specific fourth pointer group is the same as the name of the type corresponding to the first global variable, the specific fourth pointer group is located from the second metadata.

For the third pointer group, the type of the member variable included in the parent type and the name of the member variable included in the parent type may be obtained based on the first parent-type pointer in the third pointer group, and the type of the member variable included in the type and the name of the member variable included in the type may be obtained based on the first member variable pointer in the third pointer group. The first member variable corresponding to the first global variable includes: the member variable included in the type corresponding to the first global variable, and the member variable included in the parent type of the type. Therefore, the type and the name of the first member variable corresponding to the first global variable are obtained based on the first parent-type pointer and the first member variable pointer.

The first member variable corresponds to a fifth pointer group, and the fifth pointer group is a pointer group shown in FIG. 5. The fifth pointer group of the first member variable may be obtained based on both the first parent-type pointer and the first member variable pointer, and the fifth pointer group includes a first member variable offset pointer, a first member variable type pointer, and a first member variable name pointer. Therefore, the type of the first member variable may be obtained based on the first member variable type pointer, and the name of the first member variable may be obtained based on the first member variable name pointer. In addition, the instance data of the first member variable may be obtained from the first global variable based on the first member variable offset pointer. For a function of the instance data of the first member variable, refer to the following descriptions.

For the fourth pointer group, the type of the member variable included in the parent type and the name of the member variable included in the parent type may be obtained based on the second parent-type pointer in the fourth pointer group, and the type of the member variable included in the type and the name of the member variable included in the type may be obtained based on the second member variable pointer in the fourth pointer group, to acquire the type and the name of the second member variable corresponding to the second global variable.

The second member variable corresponds to a sixth pointer group, the sixth pointer group includes a second member variable offset pointer, a second member variable type pointer, and a second member variable name pointer, and the sixth pointer group is a pointer group shown in FIG. 5. The type of the second member variable may be obtained based on the second member variable type pointer, and the name of the second member variable may be obtained based on the second member variable name pointer. In addition, the instance data of the second member variable may be obtained from the second global variable based on the second member variable offset pointer. For a function of the instance data of the second member variable, refer to the following descriptions.

For example, in Case 2, that the first global variable is updated based on the second metadata, to acquire an updated first global variable includes: A target heap memory pointer is obtained based on the first global variable address pointer; the first global variable is obtained based on the target heap memory pointer; and a head pointer included in the first global variable is enabled to update from indicating the third pointer group to indicating the fourth pointer group.

The first global variable is a global variable referenced by the first code, and the first metadata and the first code are located in a same first shared library. Therefore, a pointer group indicated by the head pointer of the first global variable is the third pointer group included in the first metadata. However, because the first shared library is already an old shared library, and the old shared library is no longer used subsequently, the head pointer of the first global variable needs to be modified, so that the head pointer of the first global variable indicates the fourth pointer group included in the second metadata located in a new shared library, and the new shared library is the second shared library. The modified first global variable of the head pointer is the updated first global variable.

Correspondingly, that the updated first global variable is used as the second global variable includes: The second global variable address pointer is enabled to indicate the target heap memory pointer. Because the second global variable address pointer has been enabled to indicate the target heap memory pointer, the target heap memory pointer may be obtained based on the second global variable address pointer, and the updated first global variable may be obtained based on the target heap memory pointer, so that the updated first global variable is used as the second global variable.

Case 3: When the first member variable is partially the same as the second member variable, that the second global variable is acquired based on the first global variable includes: A third global variable is generated based on the second metadata; initial instance data of a target member variable included in the third global variable is updated based on instance data of the target member variable included in the first global variable, to acquire an updated third global variable; and the updated third global variable is used as the second global variable. The first member variable is a member variable corresponding to the first global variable, and the second member variable is a member variable corresponding to the second global variable.

For example, if the first member variable included in the first global variable is a member variable 0 and a member variable 1, and the second member variable included in the second global variable is only the member variable 0, or is only the member variable 1, or further includes a member variable 3 in addition to the member variable 0 and the member variable 1, it indicates that the first member variable is partially the same as the second member variable. Because the first member variable is partially the same as the second member variable, and a layout of the global variable is represented by using the member variable, a layout of the first global variable is different from a layout of the second global variable.

For example, whether the first member variable is partially the same as the second member variable may be determined based on the type and the name of the first member variable and the type and the name of the second member variable. In this embodiment of this application, all first member variables and all second member variables may be traversed. If for one first member variable, there is no second member variable whose type and name are the same as those of the first member variable; and/or for one second member variable, there is no first member variable whose type and name are the same as those of the second member variable, it indicates that the first member variable is only partially the same as the second member variable. For manners of obtaining the type and the name of the first member variable and the type and the name of the second member variable, refer to the descriptions in Case 2 above. Details are not described herein.

In this embodiment of this application, a same member variable in the first member variable and the second member variable is used as the target member variable. For example, if the first member variable is the member variable 0, and the second member variable is the member variable 0 and the member variable 1, the target member variable is the member variable 0.

As described above, the third global variable is generated based on the second metadata. Therefore, the head pointer included in the third global variable indicates the fourth pointer group included in the second metadata. In addition, the third global variable further includes initial instance data of the second member variable. Similar to the global variable, the member variable may also be considered to be constituted by values, and the initial instance data is an initial value.

It should be noted that, compared with the first global variable, the third global variable occupies a new segment of address in a heap memory. A reason why the third global variable needs to occupy a new segment of address is that the first member variable is only partially the same as the second member variable. If an old address occupied by the first global variable in the heap memory is still used, a length of the old address may be inappropriate. For example, if the second member variable is greater than the first member variable, the old segment of address cannot store instance data of each second member variable. For another example, if the second member variable is less than the first member variable, although the old segment of address may store instance data of each second member variable, and consequently a heap memory waste is caused. Therefore, when the first member variable is only partially the same as the second member variable, the third global variable needs to be generated based on the second metadata, and the third global variable occupies a new segment of address in the heap memory.

In an example embodiment, Case 3 may be further divided into a case 1 and a case 2.

In the case 1, that initial instance data of a target member variable included in the third global variable is updated based on instance data of the target member variable included in the first global variable, to acquire an updated third global variable includes: When a first condition is met, the initial instance data of the target member variable included in the third global variable is updated to the instance data of the target member variable included in the first global variable. The case 1 is also referred to as shallow copy.

The first condition is as follows: a type of the first member variable and a type of the second member variable are basic types. Alternatively, the first condition is as follows: a type of the first member variable and a type of the second member variable are reference types, and the first sub member variable is completely the same as the second sub member variable. If the first sub member variable is completely the same as the second sub member variable, it indicates that the layout of the first member variable is the same as the layout of the second member variable, and the layout of the member variable is represented by using the sub member variable. The first sub member variable is a sub member variable of the target member variable included in the first member variable, and the second sub member variable is a sub member variable of the target member variable included in the second member variable.

The attribute information of the first global variable further includes attribute information of the first sub member variable of the first member variable, for example, a type and a name of the first sub member variable. The attribute information of the second global variable further includes attribute information of the sub member variable of the second member variable, for example, a type and a name of the second sub member variable. Correspondingly, whether the first sub member variable is completely the same as the second sub member variable may be determined based on the type and the name of the first sub member variable and the type and the name of the second sub member variable. For a manner of obtaining the type and the name of the sub member variable and a manner of determining whether all the sub member variables are the same, refer to the manner of obtaining the type and the name of the member variable and the manner of determining whether all the member variables are the same in the foregoing descriptions. Details are not described again.

In addition, it can be learned from the foregoing descriptions that the instance data of the first member variable may be obtained from the first global variable based on the first member variable offset pointer. Because the target member variable belongs to the first member variable, the instance data of the target member variable may be obtained from the first global variable based on the first member variable offset pointer. It can be further learned from the foregoing descriptions that the instance data of the second member variable may be obtained from the second global variable based on the second member variable offset pointer. Because the second member variable offset pointer is located in the second metadata, and the third global variable is generated based on the second metadata, the initial instance data of the target member variable may be obtained from the third global variable based on the second member variable offset pointer.

The previous first condition is used as an example. The first member variable includes a member variable 0, and instance data of the member variable 0 is a value 5. The second member variable includes a member variable 0 and a member variable 1. In a third member variable, initial instance data of the member variable 0 is a value 1, and initial instance data of the member variable 1 is 0. Because the target member object is the member variable 0, in the third member variable, the member variable 0 is replaced with the value 5 from the value 1, and the value 1 of the member variable 1 remains unchanged, to obtain an updated third member variable.

For another example, the following first condition is used as an example. The first member variable includes a member variable 0, and a first sub member variable of the member variable 0 includes a sub member variable 01 and a sub member variable 02. The second member variable includes a member variable 0 and a member variable 1, and a second sub member variable of the member variable 0 includes a sub member variable 01 and a sub member variable 02. It can be learned that the first member variable is partially the same as the second member variable, the same target member variable is the member variable 0, and the first sub member variable is completely the same as the second sub member variable. This belongs to the case 1. Therefore, in the third member variable, the initial instance data of the member variable 1 remains unchanged, and the initial instance data of the member variable 0 is replaced with the instance data of the member variable 0 included in the first global variable. In other words, the instance data of the member variable 0 included in the first global variable overwrites the initial instance data of the member variable 0 in the third member variable. In this way, the updated third global variable is acquired.

In the case 2, that initial instance data of a target member variable included in the third global variable is updated based on instance data of the target member variable included in the first global variable, to acquire an updated third global variable includes: When a second condition is met, initial sub instance data, of a target sub member variable, included in the initial instance data of the target member variable is updated to sub instance data, of the target sub member variable, included in the instance data of the target member variable, where the target sub member variable is a same sub member variable in a first sub member variable and a second sub member variable, the first sub member variable is a sub member variable of the target member variable included in the first member variable, and the second sub member variable is a sub member variable of the target member variable included in the second member variable. The case 2 is also referred to as deep copy.

The second condition includes: a type of the first member variable and a type of the second member variable are reference types, and the first sub member variable is partially the same as the second sub member variable. That is, the layout of the first member variable is different from the layout of the second member variable. In this embodiment of this application, whether the first sub member variable is partially the same as the second sub member variable may be determined based on the type and the name of the first sub member variable and the type and the name of the second sub member variable. For a manner of determining whether the sub member variables are partially the same, refer to the manner of determining whether the member variables are partially the same in the foregoing descriptions. Details are not described again.

For example, the first member variable includes a member variable 0, and a first sub member variable of the member variable 0 includes a sub member variable 01 and a sub member variable 02. The second member variable includes a member variable 0 and a member variable 1, and a second sub member variable of the member variable 0 includes a sub member variable 01 and a sub member variable 03. It can be learned that the first member variable is partially the same as the second member variable, the same target member variable is the member variable 0, the first sub member variable is partially the same as the second sub member variable, and the same target sub member variable is the sub member variable 01. This belongs to the case 2. Therefore, in the third member variable, initial instance data of the member variable 1 remains unchanged, and in the member variable 0, initial instance data of the sub member variable 03 remains unchanged, and initial sub instance data of the sub member variable 03 is replaced with sub instance data of the sub member variable 01 included in the first global variable. In other words, the sub instance data of the sub member variable 01 included in the first global variable overwrites initial sub instance data of the sub member variable 01 in the third member variable. In this way, the updated third global variable is acquired.

For example, regardless of the case 1 or the case 2, that the updated third global variable is used as the second global variable may include: A second global variable address pointer is enabled to indicate a reference heap memory pointer, where the reference heap memory pointer is used to obtain the updated third global variable. Because the second global variable address pointer has been enabled to indicate the reference heap memory pointer, the reference heap memory pointer may be obtained based on the second global variable address pointer, and the updated third global variable may be obtained based on the reference heap memory pointer, so that the updated third global variable is used as the second global variable.

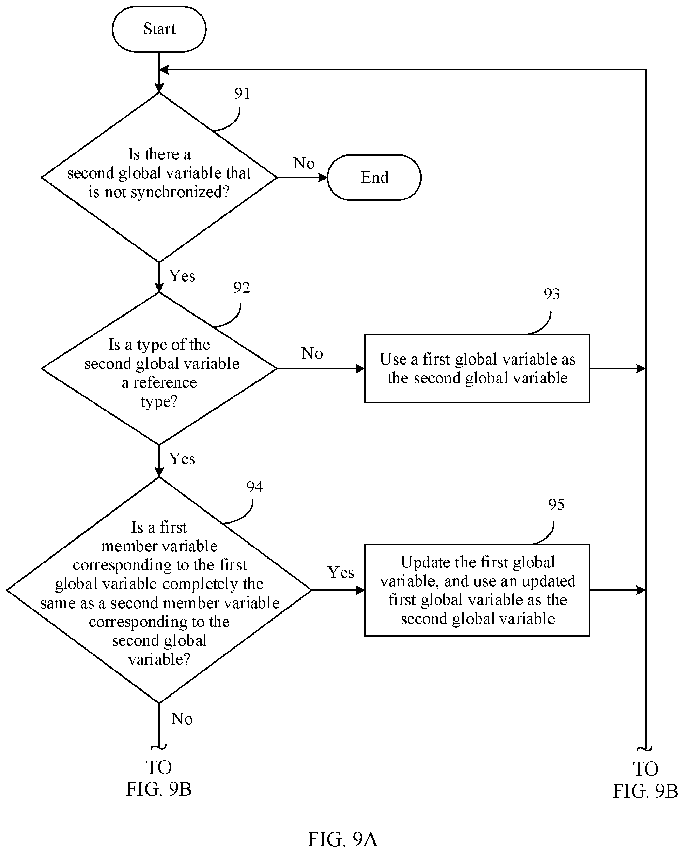

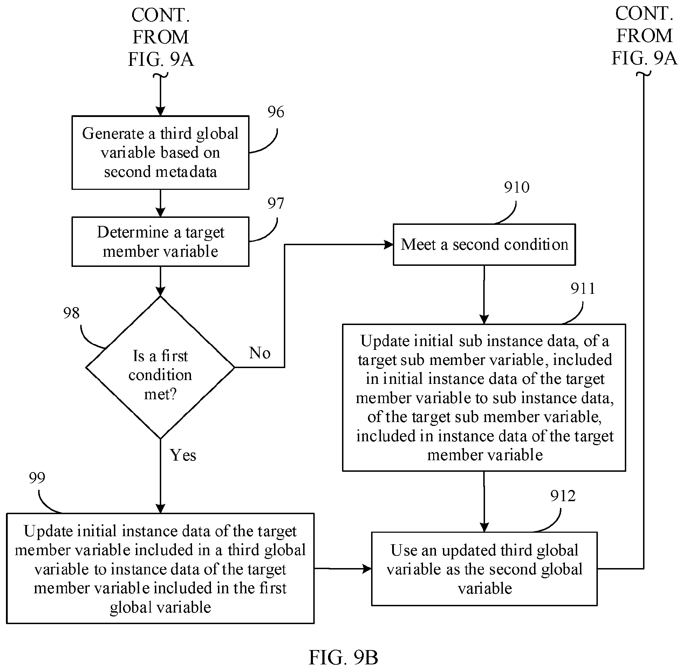

In conclusion, in Case 1, Case 2, and Case 3, in this embodiment of this application, the process of acquiring the second global variable based on the first global variable or the process of synchronizing the first global variable to the second global variable may be a process shown in FIG. 9A and FIG. 9B. The process includes step 91 to step 912.

Step 91: Determine whether there is a second global variable that is not synchronized.

If there is the second global variable that is not synchronized, step 92 needs to continue to be performed. If there is no second global variable that is not synchronized, that is, all second global variables that need to be synchronized are synchronized, the process ends.

Step 92: Determine whether a type of the second global variable is a reference type.

If the type of the second global variable is not a reference type, that is, the type of the second global variable is a basic type, step 93 continues to be performed. Alternatively, if the type of the second global variable is a reference type, step 94 continues to be performed.

Step 93: Use the first global variable as the second global variable.

For an implementation of step 93, refer to the descriptions in Case 1 above. After step 93 is completed, the process returns to step 91.

Step 94: Determine whether a first member variable corresponding to the first global variable is completely the same as a second member variable corresponding to the second global variable.

If the first member variable is completely the same as the second member variable, step 95 may continue to be performed. If the first member variable is partially the same as the second member variable, step 96 may continue to be performed.

Step 95: Update the first global variable, and use an updated first global variable as the second global variable.

For an implementation of step 95, refer to the descriptions in Case 2 above. After step 95 is completed, the process returns to step 91.

Step 96: Generate a third global variable based on second metadata.

For an implementation of step 96, refer to the descriptions in Case 3 above. After step 96 is completed, step 97 needs to continue to be performed.

Step 97: Determine a target member variable.

A same member variable in the first member variable and the second member variable is determined as the target member variable, and then step 98 continues to be performed.

Step 98: Determine whether a first condition is met.

If the first condition is met, step 99 is performed. If the first condition is not met, step 910 continues to be performed. For the first condition, refer to the descriptions in the case 1 included in Case 3 above.

Step 99: Update initial instance data of the target member variable included in the third global variable to instance data of the target member variable included in the first global variable.

For an implementation of step 99, refer to the descriptions in the case 1 included in Case 3 above. After step 99 is completed, step 912 continues to be performed.

Step 910: Meet a second condition.

Because the first condition is not met, the second condition is met. For the second condition, refer to the descriptions in the case 2 included in Case 3 above. After step 910 is completed, step 911 continues to be performed.

Step 911: Update initial sub instance data, of a target sub member variable, included in the initial instance data of the target member variable to sub instance data, of the target sub member variable, included in the instance data of the target member variable.

For an implementation of step 911, refer to the descriptions in the case 2 included in Case 3 above. After step 911 is completed, step 912 also continues to be performed.

Step 912: Use the updated third global variable as the second global variable.

For an implementation of step 912, refer to the descriptions in Case 3 above. After step 912 is completed, the process returns to step 91.

Based on step 91 to step 912, synchronization between the first global variable and the second global variable can be implemented, that is, the second global variable is acquired based on the first global variable.

Step 704: Switch, based on the second global variable, from running the first code to running the second code.

If the second global variable has been determined through step 703, the second code may reference the second global variable and is run. Therefore, the application may be switched from running old first code to running new second code, so that the application is updated. This embodiment of this application provides a manner of determining the second global variable. Therefore, a developer does not need to manually synchronize the first global variable with the second global variable, thereby improving efficiency of updating the application. In addition, because the second global variable is determined, the application does not need to be restarted and the second global variable is determined in a manner of assigning an initial value, so that updating of the application is a hot updating process in which the computer device does not need to be restarted and the application does not need to be restarted either.

In an example embodiment, there may be dependency between different shared libraries. For example, there is a third shared library depending on an old first shared library. That the third shared library depends on the first shared library means that third code included in the third shared library needs to reference a symbol included in the first shared library. Correspondingly, the method provided in this embodiment of this application further includes: when there is the third code referencing a first symbol included in the first code, modifying a pointer, of the first symbol, that is recorded in a GOT table corresponding to the third code to a pointer of a second symbol included in the second code. That is, if there is the third shared library that depends on the first shared library, after the first shared library is updated to the second shared library, the third shared library no longer depends on the first shared library, the dependency between the third shared library and the first shared library is removed, and the third shared library changes to depend on the second shared library.

The first symbol includes the first global variable, the second symbol includes the second global variable, and the first global variable and the second global variable have a same type and name; and/or the first symbol includes a first function, the second symbol includes a second function, and the first function and the second function are a same function. That is, the symbol includes a global variable and/or a function. For the pointer of the symbol, refer to the descriptions of the pointer of the symbol in step 702. Details are not described herein.

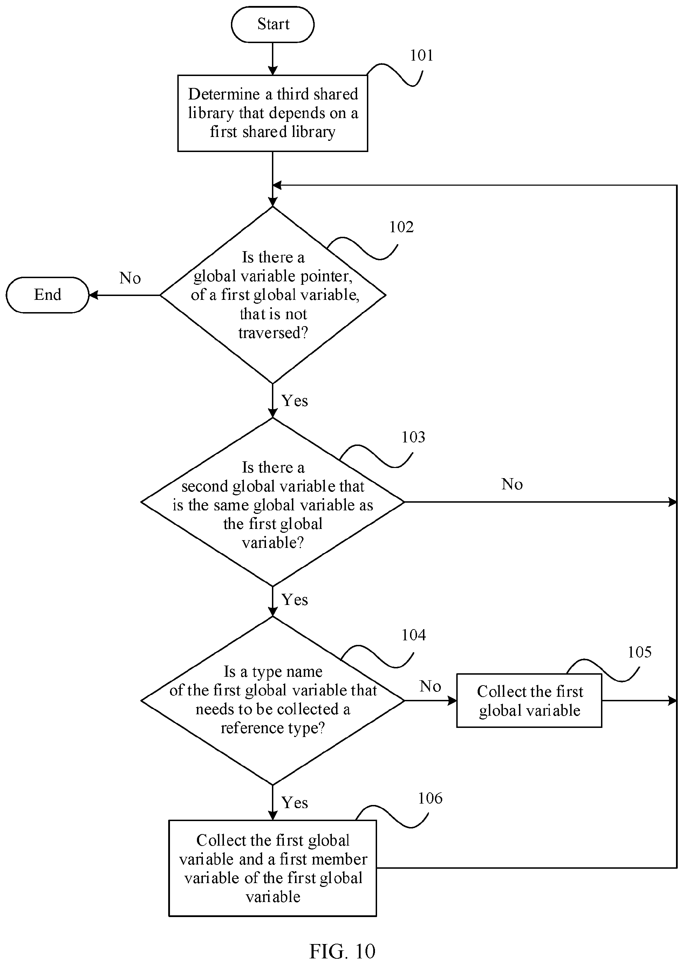

In an example embodiment, as shown in FIG. 10, because the third code included in the third shared library needs to reference the symbol included in the first shared library, in addition to obtaining the first global variable, the third shared library that depends on the first shared library needs to be determined, namely, step 101 shown in FIG. 10. In addition, step 102 to step 106 shown in FIG. 10 are steps of obtaining the first global variable. For these steps, refer to step 81 to step 85 corresponding to FIG. 8. Details are not described herein again.

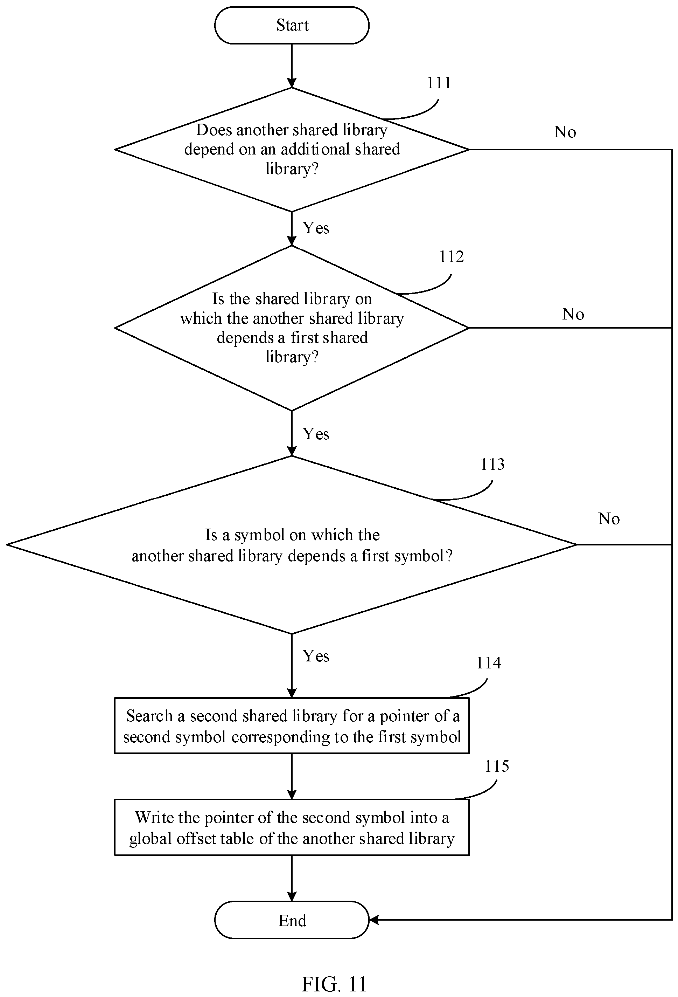

In addition, refer to FIG. 11. FIG. 11 shows a process of modifying the pointer of the symbol. Step 111 to step 115 are included.

Step 111: Determine whether another shared library depends on an additional shared library.

The application may need to reference a plurality of shared libraries during running, and there may be dependency between the plurality of shared libraries. The another shared library is a shared library, except the first shared library, in the shared libraries referenced by the application before updating. If the another shared library depends on the additional shared library, that is, depends on a shared library other than the another shared library, step 112 continues to be performed. If the another shared library does not depend on any shared library, the method ends.

Step 112: Determine whether the shared library on which the another shared library depends is the first shared library.

If the another shared library depends only on a shared library other than the first shared library, it is considered that the another shared library is not affected after the first shared library is updated to the second shared library, and the method may end. If the another shared library depends on the first shared library, it is considered that the another shared library may be affected after the first shared library is updated to the second shared library, and step 113 needs to continue to be performed.

Step 113: Determine whether a symbol on which the another shared library depends is a first symbol.

If the symbol on which code of the another shared library depends is not the first symbol, it is considered that after the first symbol is updated to the second symbol, the another shared library is not affected, and the method may end. If the symbol on which the code of the another shared library depends is the first symbol, it is considered that the another shared library belongs to the third shared library, and the third shared library includes the third code referencing the first symbol. Therefore, after the first symbol is updated to a second symbol, the third code is affected, and step 114 needs to continue to be performed.

Step 114: Search the second shared library for a pointer of the second symbol corresponding to the first symbol.

Before the first symbol is updated to the second symbol, the GOT table in the third shared library records the pointer of the first symbol. Because the first symbol is updated to the second symbol, the pointer, of the first symbol, that is recorded in the GOT table needs to change to the pointer of the second symbol. Therefore, the second shared library is searched for the pointer of the second symbol, and step 115 continues to be performed.

Step 115: Write the pointer of the second symbol into the GOT table of the another shared library.

The pointer, of the first symbol, that is recorded in the GOT table corresponding to the third code is modified to the pointer, of the second symbol, that is found in step 114, to remove the dependency between the third shared library and the first shared library, and the third shared library changes from depending on the first shared library to depending on the second shared library.

In an example embodiment, the method further includes: deleting the first global variable that does not need to be used after the second global variable is acquired, and/or deleting the first code and the first metadata.

In addition to the first global variable that is used as the second global variable in Case 1 above and the updated first global variable that is used as the second global variable in Case 2 above, other first global variables all may be considered as first global variables that do not need to be used after the second global variable is determined. In addition, because there are already the new second code and the new second metadata, the old first code and the old first metadata no longer need to be used, so that the first code and the first metadata can be deleted. The memory can be released through deletion in time, to avoid a memory waste.

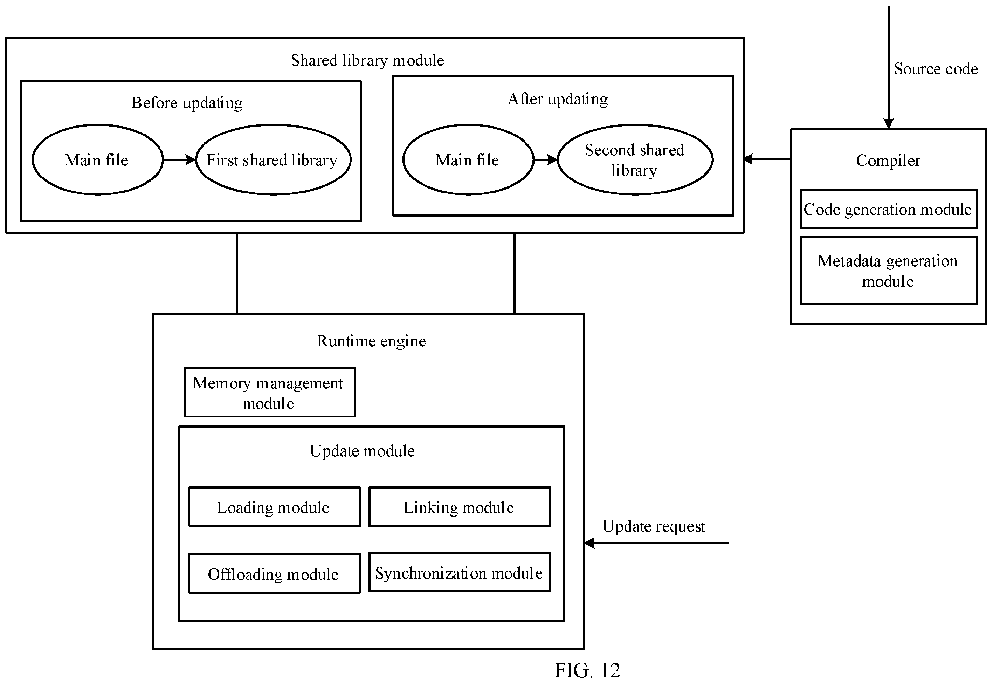

The application update method provided in this embodiment of this application may be applied to an implementation scenario shown in FIG. 12. The implementation scenario is located in the computer device. Refer to FIG. 12. The implementation scenario includes a compiler, a shared library module, and a runtime engine, and both the compiler and the runtime engine are software.

The compiler includes a code generation module and a metadata generation module. The code generation module is configured to compile source code into a target high-level language, to acquire code. The metadata generation module is configured to generate metadata, where the metadata indicates attribute information of a global variable referenced by the code. For old-version source code, first code and first metadata that are generated are located in a first shared library, the first shared library is run before a main file of an application is updated, and the first shared library may be represented as lib*.so. For new-version source code, second code and second metadata that are generated are located in a second shared library, the second shared library is run after a main file of the application is updated, and the second shared library may be represented as libnew*.so. For example, the compiler may further include an optimization module that is not shown in FIG. 12, configured to perform optimization such as error correction in a compilation process.

The runtime engine includes a memory management module and an update module. The update module includes a loading module, a linking module, a synchronization module, and an offloading module. The loading module is configured to: after receiving an update request, load the second code and the second metadata to a memory, that is, the memory occupied by the second shared library is allocated by the memory management module. The linking module is configured to implement internal symbol linking and external symbol linking for the second code and the second metadata. The synchronization module is configured to acquire a second global variable based on a first global variable. The memory management module is further configured to allocate a heap memory, and the heap memory is configured to store the second global variable. After the application is updated, the offloading module may invoke the memory management module to delete the first global variable that does not need to be used after the second global variable is determined, and delete the first code and the first metadata, to release the memory. The offloading module is also referred to as a recycling module. For example, the runtime engine may further include another functional module. This is not limited herein. For example, the another functional module may be an exception processing module, and the exception processing module is configured to process an exception that occur during running of the application.

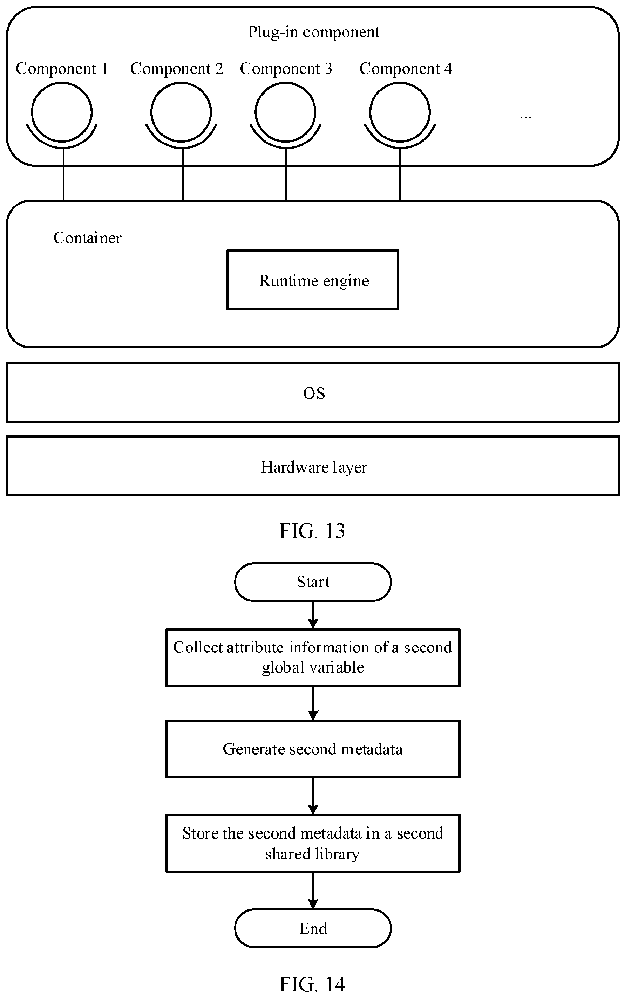

An embodiment of this application further provides an implementation scenario in which there is no dependency. Refer to FIG. 13. The implementation scenario includes a plug-in component, a container, an operating system (operating system, OS), and a hardware layer. The plug-in component includes at least one component, for example, a component 1 or a component 2. The container may include but is not limited to a runtime engine. One component may be used as one shared library, and the runtime engine is, for example, the runtime engine shown in FIG. 12. In this implementation scenario, there is no dependency between components, and a message is transferred between components through the container. For example, the container may have at least one of a process communication management module, a signal management module, a message processing module, and a data base management module, and may transfer a message through at least one module. In this implementation scenario, implementation steps include step 131 to step 135 below.

Step 131: As shown in FIG. 14, collect attribute information of the second global variable, and generate the second metadata based on the attribute information of the second global variable. For the attribute information of the second global variable and the second metadata, refer to the descriptions in the method embodiments. In addition, the second metadata is stored in the second shared library, namely, a new shared library, to acquire the second shared library.

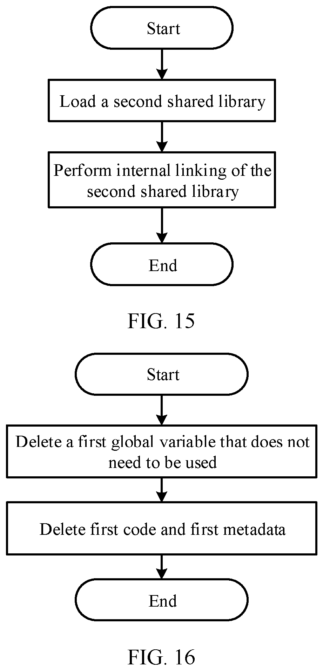

Step 132: As shown in FIG. 15, load the second shared library to the memory, and perform internal linking work of the second shared library.

Step 133: Obtain the first global variable. For step 133, refer to the descriptions corresponding to FIG. 8 in step 703.

Step 134: Acquire the second global variable based on the first global variable. For step 134, refer to the descriptions corresponding to FIG. 9A and FIG. 9B in step 703.

Step 135: As shown in FIG. 16, delete the first global variable that does not need to be used, and delete the first code and the first metadata.

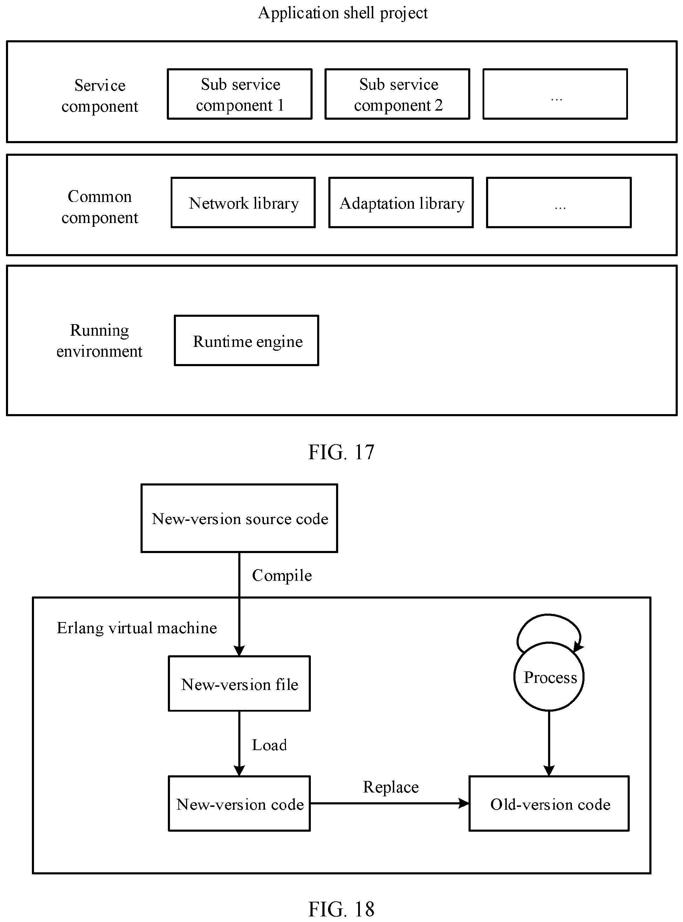

An embodiment of this application further provides another implementation scenario in which there is dependency. Refer to FIG. 17. The implementation scenario is an Android component-based framework design scenario, for example, an application shell project. The implementation scenario includes a service component, a common component, and a running environment. The service component includes at least one sub service component, for example, a sub service component 1 and a sub service component 2. The sub service component is configured to provide functions such as user login. The common component includes but is not limited to two parts: a network library and an adaptation library. The adaptation library is used to adapt the application shell project to different running environments. The network library has a plurality of forms, and is used to store network data required by the application shell project. The runtime environment includes a runtime engine, and the runtime engine is, for example, the runtime engine shown in FIG. 12.

In this implementation scenario, one sub service component may be used as one shared library, and the common component may also be used as one shared library. For example, there may be dependency between the sub service component and the common component. In addition, there may be no dependency between different sub service components. If there are a plurality of common components, there may be or may be no dependency between different common components. In this implementation scenario, the implementation steps include step 171 to step 176 below.

Step 171: As shown in FIG. 14, obtain attribute information of the second global variable, generate the second metadata, and store the second metadata into the second shared library.

Step 172: Load the second shared library to the memory, and perform internal linking work of the second shared library. In addition, external linking work of the second shared library is also performed. For step 172, refer to the descriptions in step 702. For example, if one common component is the second shared library and depends on another common component, after loading is completed, internal linking work and external linking work need to be performed for the second shared library.

Step 173: Obtain the first global variable. For step 173, refer to the descriptions corresponding to FIG. 8 in step 703.

Step 174: Acquire the second global variable based on the first global variable. For step 174, refer to the descriptions corresponding to FIG. 9A and FIG. 9B in step 703.

Step 175: Modify a pointer of a symbol. For example, if one common component is the second shared library, and one sub service component depends on the second shared library, that is, code included in the sub service component references the first shared library corresponding to the second shared library, the pointer of the symbol in a GOT table included in the sub service component needs to be modified. For details, refer to the descriptions in step 704.

Step 176: As shown in FIG. 16, delete the first global variable that does not need to be used, and delete the first code and the first metadata.

The following compares and describes a related technology 1, a related technology 2, and embodiments of this application.

In the related technology 1, when an application is updated, an Erlang (a dynamic programming language) virtual machine needs to be depended on. For the Erlang virtual machine, refer to FIG. 18.

In the update process, a developer develops new-version source code, and compiles the new-version source code into a new-version file. The new-version file has a specific format that can be identified by the Erlang virtual machine, namely, a format specified by Erlang. After obtaining the new-version file, the Erlang virtual machine translates the new-version file into new-version code, where the new-version code is code that needs to be used after the application is updated. The new-version code includes an Erlang term storage (Erlang term storage, ETS) object. The Erlang virtual machine does not support a global variable. Therefore, the ETS object is used to replace the global variable.

After the Erlang virtual machine loads the new-version code, a user using the Erlang virtual machine needs to obtain the ETS object included in the old-version code from an ETS table, and manually copy the ETS object to the new-version code. The old-version code is code used before the application is updated. After the manual copying is completed, the application can switch from running the old-version code to running the new-version code. The application runs various versions of code based on the process.

The technical problem existing in the related technology 1 includes but is not limited to the following technical problem 1 and technical problem 2.

Technical problem 1: The user needs to manually perform copying, to implement synchronization of the ETS object. This manner is cumbersome, efficiency is low, and update time of the application is increased.

Technical problem 2: Because the global variable is not supported, the ETS object needs to be used together with the ETS table, and a large amount of the memory is occupied in the use process. In addition, the process of using the dynamic programming language, such as Erlang, additional abstract codes are generated, which occupies a large amount of the memory. It can be learned that, in the related technology 1, a large amount of the memory needs to be occupied, and a running speed of the application is affected.

For the technical problem 1, in this embodiment of this application, the global variable can be automatically acquired, and the user does not need to perform a manual operation, thereby shortening update time of the application. For the technical problem 2, in this embodiment of this application, the global variable is supported, the ETS object does not need to be used, and is limited to Erlang. Therefore, a small amount of the memory is occupied, and the application runs at a high speed.

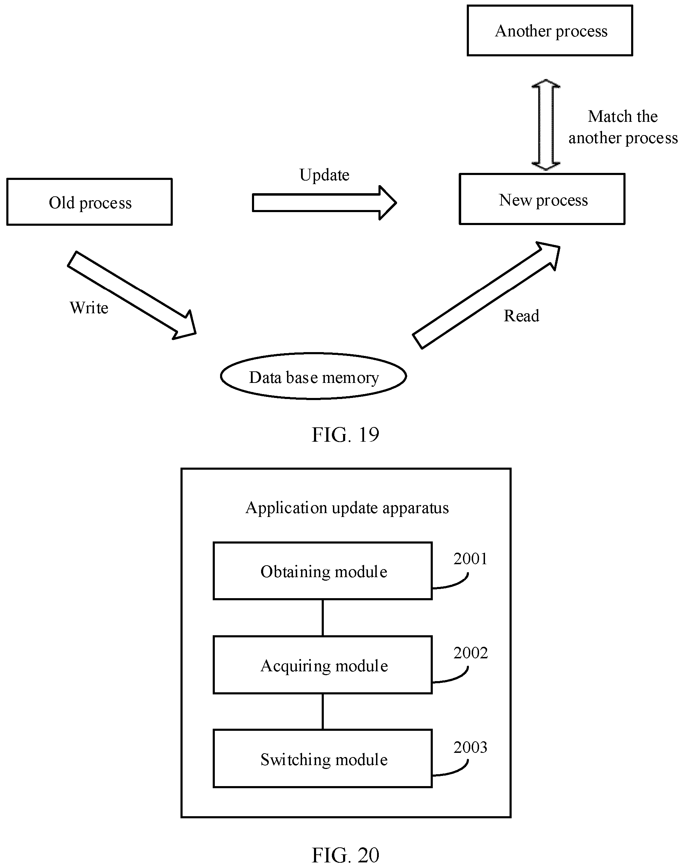

In the related technology 2, when the application is updated, a data base memory (data base memory, DBM) needs to be depended on. For the DBM, refer to FIG. 19.

In the update process, a global variable of an old process that corresponds to the application and that is being running is written into the DBM, and the old process is run based on the old-version source code. When it is detected that the old process is faulty, the new-version source code is obtained, the old process is exited, the old-version source code is replaced with the new-version source code, and the new process corresponding to the application is run based on the new-version source code, to complete process restart, namely, restart of the application. Then, the global variable of the old process is read from the DBM, and the user manually copies the global variable of the old process to the global variable of the new process, to restore a process status and complete adaptation with another process.

The technical problem existing in the related technology 2 includes but is not limited to the following technical problem 3 and technical problem 4.

Technical problem 3: The process needs to be restarted, that is, the application needs to be restarted, and the user manually copies the application. Consequently, hot updating cannot be implemented, and an update speed of the application is slow.

Technical problem 4: The DBM needs to be depended on, which not only consumes a large amount of the memory, but also affects an update speed and a success rate by DBM performance.

For the technical problem 3, in this embodiment of this application, the global variable can be automatically acquired, and the user does not need to perform a manual operation or restart the application, thereby shortening update time of the application. For the technical problem 4, in this embodiment of this application, the DBM does not need to be depended on, a small amount of the memory is occupied, and the application is updated at a high speed and a high success rate.

The foregoing describes the application update method provided in embodiments of this application. Corresponding to the foregoing method, embodiments of this application further provide an application update apparatus. The apparatus is used in a computer device. The apparatus is configured to perform, through modules shown in FIG. 20, the application update method performed by the computer device in FIG. 7. As shown in FIG. 20, the application update apparatus provided in this embodiment of this application includes the following modules.

An obtaining module 2001 is configured to obtain first code and first metadata that are run by an application before updating, where the first metadata indicates attribute information of a first global variable referenced when the first code is run, where
the obtaining module 2001 is further configured to obtain second code and second metadata that need to be run by the application after updating, where the second metadata indicates attribute information of a second global variable referenced when the second code is run;
an acquiring module 2002 is configured to acquire the second global variable based on the attribute information of the first global variable and the attribute information of the second global variable; and
a switching module 2003 is configured to switch, based on the second global variable, from running the first code to running the second code.

In an example embodiment, the attribute information of the first global variable includes a type and a name of the first global variable, and the attribute information of the second global variable includes a type and a name of the second global variable; and the acquiring module 2002 is configured to: when the first global variable and the second global variable have a same type and name, acquire the second global variable based on the first global variable.

In an example embodiment, the first metadata includes a first pointer group, the first pointer group includes a first global variable type pointer and a first global variable name pointer, the second metadata includes a second pointer group, and the second pointer group includes a second global variable type pointer and a second global variable name pointer; and the obtaining module 2001 is further configured to: obtain the type of the first global variable based on the first global variable type pointer in the first pointer group; obtain the name of the first global variable based on the first global variable name pointer in the first pointer group, where the attribute information of the first global variable includes the type and the name of the first global variable; obtain the type of the second global variable based on the second global variable type pointer in the second pointer group; and obtain the name of the second global variable based on the second global variable name pointer in the second pointer group, where the attribute information of the second global variable includes the type and the name of the second global variable.

In an example embodiment, the type of the first global variable and the type of the second global variable are basic types; and the acquiring module 2002 is configured to use the first global variable as the second global variable.

In an example embodiment, the first pointer group further includes a first global variable address pointer, and the second pointer group further includes a second global variable address pointer; and the acquiring module 2002 is configured to: obtain a target heap memory pointer based on the first global variable address pointer, where the target heap memory pointer is used to obtain the first global variable; and enable the second global variable address pointer to indicate the target heap memory pointer.

In an example embodiment, the type of the first global variable and the type of the second global variable are reference types; and the acquiring module 2002 is configured to: when a first member variable is completely the same as a second member variable, update the first global variable based on the second metadata, to acquire an updated first global variable, where the first member variable is a member variable corresponding to the first global variable, and the second member variable is a member variable corresponding to the second global variable; and use the updated first global variable as the second global variable.

In an example embodiment, the first pointer group includes a first global variable address pointer, the first metadata includes a third pointer group, the second pointer group includes a second global variable address pointer, and the second metadata includes a fourth pointer group; and the acquiring module 2002 is configured to: obtain a target heap memory pointer based on the first global variable address pointer; obtain the first global variable based on the target heap memory pointer; enable a head pointer included in the first global variable to update from indicating the third pointer group to indicating the fourth pointer group; and enable the second global variable address pointer to indicate the target heap memory pointer.

In an example embodiment, the type of the first global variable and the type of the second global variable are reference types; and the acquiring module 2002 is configured to: when a first member variable is partially the same as a second member variable, generate a third global variable based on the second metadata, where the first member variable is a member variable corresponding to the first global variable, the second member variable is a member variable corresponding to the second global variable, a head pointer included in the third global variable indicates a fourth pointer group included in the second metadata, and the third global variable further includes initial instance data of the second member variable; update, based on instance data of a target member variable included in the first global variable, initial instance data of the target member variable included in the third global variable, to acquire an updated third global variable, where the target member variable is a same member variable in the first member variable and the second member variable; and use the updated third global variable as the second global variable.

In an example embodiment, the first metadata includes the third pointer group, the third pointer group includes a first parent-type pointer and a first member variable pointer, the second metadata includes the fourth pointer group, and the fourth pointer group includes a second parent-type pointer and a second member variable pointer; and the obtaining module 2001 is further configured to: obtain a type and a name of the first member variable based on the first parent-type pointer and the first member variable pointer in the third pointer group; obtain a type and a name of the second member variable based on the second parent-type pointer and the second member variable pointer in the fourth pointer group; and determine, based on the type and the name of the first member variable and the type and the name of the second member variable, that the first member variable is completely or partially the same as the second member variable.

In an example embodiment, the acquiring module 2002 is configured to: when a first condition is met, update the initial instance data of the target member variable included in the third global variable to the instance data of the target member variable included in the first global variable, where the first condition includes: a type of the first member variable and a type of the second member variable are basic types; or a type of the first member variable and a type of the second member variable are reference types, a first sub member variable is completely the same as a second sub member variable, the first sub member variable is a sub member variable of the target member variable included in the first member variable, and the second sub member variable is a sub member variable of the target member variable included in the second member variable.

In an example embodiment, the acquiring module 2002 is configured to: when a second condition is met, update initial sub instance data, of a target sub member variable, included in the initial instance data of the target member variable to sub instance data, of the target sub member variable, included in the instance data of the target member variable, where the target sub member variable is a same sub member variable in a first sub member variable and a second sub member variable, the first sub member variable is a sub member variable of the target member variable included in the first member variable, and the second sub member variable is a sub member variable of the target member variable included in the second member variable; and the second condition includes: a type of the first member variable and a type of the second member variable are reference types, and the first sub member variable is partially the same as the second sub member variable.

In an example embodiment, the acquiring module 2002 is configured to enable a second global variable address pointer to indicate a reference heap memory pointer, where the reference heap memory pointer is used to obtain the updated third global variable.

In an example embodiment, the apparatus further includes: a modification module, configured to: when there is third code referencing a first symbol included in the first code, modify a pointer, of the first symbol, that is recorded in a global offset GOT table corresponding to the third code to a pointer of a second symbol included in the second code, where the first symbol includes the first global variable, the second symbol includes the second global variable, and the first global variable and the second global variable have a same type and name; and/or the first symbol includes a first function, the second symbol includes a second function, and the first function and the second function are a same function.

In an example embodiment, the apparatus further includes: a deletion module, configured to delete the first global variable that does not need to be used after the second global variable is acquired, and/or delete the first code and the first metadata.

It should be understood that, when the apparatus provided in FIG. 20 implements functions of the apparatus, division into the foregoing functional modules is merely used as an example for description. During actual application, the foregoing functions may be allocated to different functional modules for implementation based on a requirement. In other words, an inner structure of a device is divided into different functional modules, to implement all or some of the functions described above. In addition, the apparatus provided in the foregoing embodiments and the method embodiments belong to a same concept. For specific implementation processes thereof, refer to the method embodiments. Details are not described herein again.

An embodiment of this application further provides an application update device. The device includes a memory and a processor. The memory stores at least one instruction, and the at least one instruction is loaded and executed by the processor, so that the application update device implements the application update method corresponding to FIG. 7.

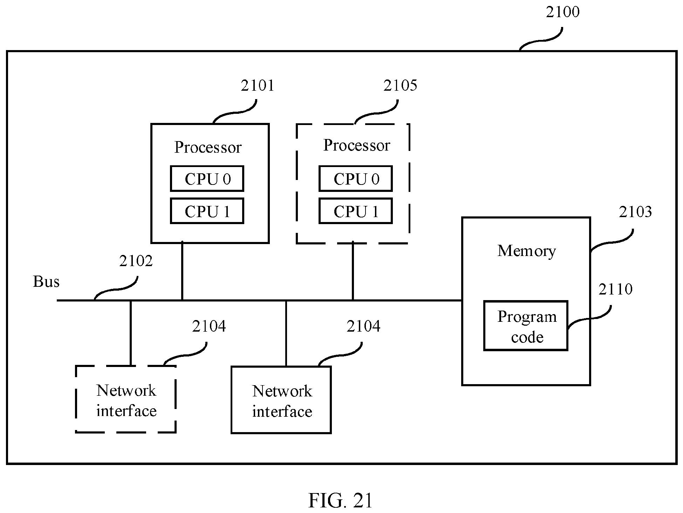

FIG. 21 is a diagram of a structure of an application update device 2100 according to an example of this application. The application update device 2100 includes at least one processor 2101, a memory 2103, and at least one network interface 2104.

The processor 2101 is, for example, a general-purpose central processing unit (central processing unit, CPU), a digital signal processor (digital signal processor, DSP), a network processor (network processor, NP), a GPU, a neural-network processing unit (neural-network processing unit, NPU), a data processing unit (Data Processing Unit, DPU), a microprocessor, or one or more integrated circuits, application-specific integrated circuits (application-specific integrated circuits, ASIC), programmable logic devices (programmable logic devices, PLD), other general-purpose processors or other programmable logic devices, discrete gates, transistor logic devices, or discrete hardware components that are configured to implement the solutions of this application, or any combination thereof. The PLD is, for example, a complex programmable logic device (complex programmable logic device, CPLD), a field programmable logic gate array (field programmable gate array, FPGA), a generic array logic (generic array logic, GAL), or any combination thereof. The general-purpose processor may be a microprocessor or any conventional processor or the like. It should be noted that the processor may be a processor that supports an advanced reduced instruction set computer machines (advanced RISC machines, ARM) architecture. The processor may implement or execute various logical blocks, modules, and circuits described with reference to content disclosed in this application. Alternatively, the processor may be a combination implementing a computing function, for example, a combination including one or more microprocessors, or a combination of the DSP and the microprocessor.

Optionally, the application update device 2100 further includes a bus 2102. The bus 2102 is configured to transfer information between components of the application update device 2100. The bus 2102 may be a peripheral component interconnect (peripheral component interconnect, PCI for short) bus, an extended industry standard architecture (extended industry standard architecture, EISA for short) bus, or the like. The bus 2102 may be classified into an address bus, a data bus, a control bus, and the like. For ease of representation, only one line is used for representation in FIG. 21, but this does not mean that there is only one bus or only one type of bus.

The memory 2103 is, for example, a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

By way of an example but not limitative descriptions, many forms of ROMs and RAMs are available. For example, the ROM is a compact disc read-only memory (compact disc read-only memory, CD-ROM). The RAM includes but is not limited to a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

Alternatively, the memory 2103 may be another type of storage device that can store static information and instructions. Alternatively, the memory 2103 may be another type of dynamic storage device that can store information and instructions. Alternatively, the memory 2103 may be other compact disc storage, optical disc storage (including a compact disc, a laser disc, an optical disc, a digital versatile disc, a Blu-ray disc, and the like), a magnetic disk storage medium, or another magnetic storage device, or any other medium that can be used to carry or store expected program code in a form of an instruction or a data structure and that can be accessed by a computer, but is not limited thereto. For example, the memory 2103 exists independently, and is connected to the processor 2101 through the bus 2102. The memory 2103 may alternatively be integrated with the processor 2101.

The network interface 2104 is configured to communicate with another device or a communication network through an apparatus of any transceiver type. The communication network may be an Ethernet, a radio access network (radio access network, RAN), a wireless local area network (wireless local area network, WLAN), or the like. The network interface 2104 may include a wired network interface, and may further include a wireless network interface. Specifically, the network interface 2104 may be an Ethernet (Ethernet) interface, for example, a fast Ethernet (Fast Ethernet, FE) interface, a gigabit Ethernet (Gigabit Ethernet, GE) interface, an asynchronous transfer mode (Asynchronous Transfer Mode, ATM) interface, a WLAN interface, a cellular network interface, or a combination thereof. The Ethernet interface may be an optical interface, an electrical interface, or a combination thereof. In some implementations of this application, the network interface 2104 may be used by the application update device 2100 to communicate with another device.

During specific implementation, in some implementations, the processor 2101 may include one or more CPUs, for example, a CPU 0 and a CPU 1 shown in FIG. 21. Each of the processors may be a single-core processor, or may be a multi-core processor. The processor herein may be one or more devices, circuits, and/or processing cores configured to process data (for example, computer program instructions).

During specific implementation, in some implementations, the application update device 2100 may include a plurality of processors, for example, a processor 2101 and a processor 2105 shown in FIG. 21. Each of the processors may be a single-core processor, or may be a multi-core processor. The processor herein may be one or more devices, circuits, and/or processing cores configured to process data (for example, computer program instructions).

In some implementations, the memory 2103 is configured to store program instructions 2110 for executing the solutions of this application, and the processor 2101 may execute the program instructions 2110 stored in the memory 2103. That is, the application update device 2100 may implement, through the processor 2101 and the program instructions 2110 in the memory 2103, the method provided in the method embodiments, that is, the computer device performs the application update method corresponding to FIG. 7. The program instructions 2110 may include one or more software modules. Optionally, the processor 2101 may also store the program instructions for executing the solutions of this application.

In a specific implementation process, the application update device 2100 in this application may correspond to a device configured to perform the foregoing method. The processor 2101 in the application update device 2100 reads instructions in the memory 2103, so that the application update device 2100 shown in FIG. 21 can perform all or some steps in the method embodiments.

The application update device 2100 may further correspond to the apparatus shown in FIG. 20. Each functional module in the apparatus shown in FIG. 20 is implemented by software of the application update device 2100. In other words, the functional modules included in the apparatus shown in FIG. 20 are generated after the processor 2101 of the application update device 2100 reads the program instructions 2110 stored in the memory 2103.

The steps in the method shown in FIG. 7 are completed through a hardware integrated logic circuit in the processor of the application update device 2100, or by using instructions in a form of software. The steps in the method embodiment disclosed with reference to this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory, and completes the steps in the method embodiment in combination with hardware of the processor. To avoid repetition, details are not described herein again.

For example, an embodiment of this application further provides a computer-readable storage medium. The computer-readable storage medium stores at least one instruction, and the instruction is loaded and executed by a processor, to implement the application update method corresponding to FIG. 7.

In an example embodiment, an embodiment of this application further provides a computer program product. The computer program product includes a computer program/instructions, and the computer program/instructions are executed by a processor, so that a computer implements the application update method corresponding to FIG. 7.

Optionally, an embodiment of this application further provides a chip. The chip includes a processor, configured to invoke, from a memory, instructions stored in the memory, and run the instructions, so that a computer in which the chip is installed performs the application update method corresponding to FIG. 7.

For example, an embodiment of this application further provides another chip. The chip includes an input interface, an output interface, a processor, and a memory. The input interface, the output interface, the processor, and the memory are connected through an internal connection path. The processor is configured to execute code in the memory. When the code is executed, a computer in which the chip is installed performs the application update method corresponding to FIG. 7.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should be further understood that although the following descriptions use terms such as "first" and "second" to describe various elements, these elements should not be limited by the terms. These terms are simply used to distinguish one element from another.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

The term "at least one" in this application means one or more, and the term "a plurality of" in this application means two or more. For example, a plurality of shared libraries mean two or more shared libraries.

It should be understood that the terms used in the descriptions of various examples in this specification are merely intended to describe specific examples, but are not intended to constitute a limitation. The terms "one" ("a" and "an") and "the" of singular forms used in the descriptions of the various examples and the appended claims are also intended to include plural forms, unless otherwise specified in the context clearly.

It should be further understood that the term "and/or" used in this specification indicates and includes any combination and all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application usually indicates an "or" relationship between the associated objects.

It should be further understood that the terms "if" and "assuming that" may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

The foregoing descriptions are embodiments of this application, but are not intended to limit this application. Any modification, equivalent replacement, improvement, or the like made without departing from the principle of this application should fall within the protection scope of this application.

## Claims

1. An application update method, wherein the method comprises:
obtaining first code and first metadata that are run by an application before updating, wherein the first metadata indicates attribute information of a first global variable referenced when the first code is run;
obtaining second code and second metadata that need to be run by the application after updating, wherein the second metadata indicates attribute information of a second global variable referenced when the second code is run;
acquiring the second global variable based on the attribute information of the first global variable and the attribute information of the second global variable; and
switching, based on the second global variable, from running the first code to running the second code.

2. The method according to claim 1, wherein the attribute information of the first global variable comprises a type and a name of the first global variable, and the attribute information of the second global variable comprises a type and a name of the second global variable; and
the acquiring the second global variable based on the attribute information of the first global variable and the attribute information of the second global variable comprises:
when the first global variable and the second global variable have a same type and name, acquiring the second global variable based on the first global variable.

3. The method according to claim 1 or 2, wherein the first metadata comprises a first pointer group, the first pointer group comprises a first global variable type pointer and a first global variable name pointer, the second metadata comprises a second pointer group, and the second pointer group comprises a second global variable type pointer and a second global variable name pointer; and
before the acquiring the second global variable based on the attribute information of the first global variable and the attribute information of the second global variable, the method further comprises:
obtaining the type of the first global variable based on the first global variable type pointer in the first pointer group;
obtaining the name of the first global variable based on the first global variable name pointer in the first pointer group, wherein the attribute information of the first global variable comprises the type and the name of the first global variable;
obtaining the type of the second global variable based on the second global variable type pointer in the second pointer group; and
obtaining the name of the second global variable based on the second global variable name pointer in the second pointer group, wherein the attribute information of the second global variable comprises the type and the name of the second global variable.

4. The method according to claim 2 or 3, wherein the type of the first global variable and the type of the second global variable are basic types; and
the acquiring the second global variable based on the first global variable comprises:
using the first global variable as the second global variable.

5. The method according to claim 4, wherein the first pointer group further comprises a first global variable address pointer, and the second pointer group further comprises a second global variable address pointer; and
the using the first global variable as the second global variable comprises:
obtaining a target heap memory pointer based on the first global variable address pointer, wherein the target heap memory pointer is used to obtain the first global variable; and
enabling the second global variable address pointer to indicate the target heap memory pointer.

6. The method according to claim 2 or 3, wherein the type of the first global variable and the type of the second global variable are reference types; and
the acquiring the second global variable based on the first global variable comprises:
when a first member variable is completely the same as a second member variable, updating the first global variable based on the second metadata, to acquire an updated first global variable, wherein the first member variable is a member variable corresponding to the first global variable, and the second member variable is a member variable corresponding to the second global variable; and
using the updated first global variable as the second global variable.

7. The method according to claim 6, wherein the first pointer group comprises a first global variable address pointer, the first metadata comprises a third pointer group, the second pointer group comprises a second global variable address pointer, and the second metadata comprises a fourth pointer group;
the updating the first global variable based on the second metadata, to acquire an updated first global variable comprises:
obtaining a target heap memory pointer based on the first global variable address pointer;
obtaining the first global variable based on the target heap memory pointer; and
enabling a head pointer comprised in the first global variable to update from indicating the third pointer group to indicating the fourth pointer group; and
the using the updated first global variable as the second global variable comprises:
enabling the second global variable address pointer to indicate the target heap memory pointer.

8. The method according to claim 2 or 3, wherein the type of the first global variable and the type of the second global variable are reference types; and
the acquiring the second global variable based on the first global variable comprises:
when a first member variable is partially the same as a second member variable, generating a third global variable based on the second metadata, wherein the first member variable is a member variable corresponding to the first global variable, the second member variable is a member variable corresponding to the second global variable, a head pointer comprised in the third global variable indicates a fourth pointer group comprised in the second metadata, and the third global variable further comprises initial instance data of the second member variable;
updating, based on instance data of a target member variable comprised in the first global variable, initial instance data of the target member variable comprised in the third global variable, to acquire an updated third global variable, wherein the target member variable is a same member variable in the first member variable and the second member variable; and
using the updated third global variable as the second global variable.

9. The method according to any one of claims 6 to 8, wherein the first metadata comprises the third pointer group, the third pointer group comprises a first parent-type pointer and a first member variable pointer, the second metadata comprises the fourth pointer group, and the fourth pointer group comprises a second parent-type pointer and a second member variable pointer; and
the method further comprises:
obtaining a type and a name of the first member variable based on the first parent-type pointer and the first member variable pointer in the third pointer group;
obtaining a type and a name of the second member variable based on the second parent-type pointer and the second member variable pointer in the fourth pointer group; and
determining, based on the type and the name of the first member variable and the type and the name of the second member variable, that the first member variable is completely or partially the same as the second member variable.

10. The method according to claim 8, wherein the updating, based on instance data of a target member variable comprised in the first global variable, initial instance data of the target member variable comprised in the third global variable, to acquire an updated third global variable comprises:
when a first condition is met, updating the initial instance data of the target member variable comprised in the third global variable to the instance data of the target member variable comprised in the first global variable, wherein
the first condition comprises:
a type of the first member variable and a type of the second member variable are basic types; or
a type of the first member variable and a type of the second member variable are reference types, a first sub member variable is completely the same as a second sub member variable, the first sub member variable is a sub member variable of the target member variable comprised in the first member variable, and the second sub member variable is a sub member variable of the target member variable comprised in the second member variable.

11. The method according to claim 8, wherein the updating, based on instance data of a target member variable comprised in the first global variable, initial instance data of the target member variable comprised in the third global variable, to acquire an updated third global variable comprises:
when a second condition is met, updating initial sub instance data, of a target sub member variable, comprised in the initial instance data of the target member variable to sub instance data, of the target sub member variable, comprised in the instance data of the target member variable, wherein the target sub member variable is a same sub member variable in a first sub member variable and a second sub member variable, the first sub member variable is a sub member variable of the target member variable comprised in the first member variable, and the second sub member variable is a sub member variable of the target member variable comprised in the second member variable; and
the second condition comprises:
a type of the first member variable and a type of the second member variable are reference types, and the first sub member variable is partially the same as the second sub member variable.

12. The method according to any one of claims 8, 10, and 11, wherein the using the updated third global variable as the second global variable comprises:
enabling a second global variable address pointer to indicate a reference heap memory pointer, wherein the reference heap memory pointer is used to obtain the updated third global variable.

13. The method according to any one of claims 1 to 12, wherein the method further comprises:
when there is third code referencing a first symbol comprised in the first code, modifying a pointer, of the first symbol, that is recorded in a global offset GOT table corresponding to the third code to a pointer of a second symbol comprised in the second code, wherein
the first symbol comprises the first global variable, the second symbol comprises the second global variable, and the first global variable and the second global variable have a same type and name; and/or
the first symbol comprises a first function, the second symbol comprises a second function, and the first function and the second function are a same function.

14. The method according to any one of claims 1 to 13, wherein the method further comprises:
deleting the first global variable that does not need to be used after the second global variable is acquired, and/or deleting the first code and the first metadata.

15. An application update apparatus, wherein the apparatus comprises:
an obtaining module, configured to obtain first code and first metadata that are run by an application before updating, wherein the first metadata indicates attribute information of a first global variable referenced when the first code is run, wherein
the obtaining module is further configured to obtain second code and second metadata that need to be run by the application after updating, wherein the second metadata indicates attribute information of a second global variable referenced when the second code is run;
an acquiring module, configured to acquire the second global variable based on the attribute information of the first global variable and the attribute information of the second global variable; and
a switching module, configured to switch, based on the second global variable, from running the first code to running the second code.

16. The apparatus according to claim 15, wherein the attribute information of the first global variable comprises a type and a name of the first global variable, and the attribute information of the second global variable comprises a type and a name of the second global variable; and
the acquiring module is configured to: when the first global variable and the second global variable have a same type and name, acquire the second global variable based on the first global variable.

17. The apparatus according to claim 15 or 16, wherein the first metadata comprises a first pointer group, the first pointer group comprises a first global variable type pointer and a first global variable name pointer, the second metadata comprises a second pointer group, and the second pointer group comprises a second global variable type pointer and a second global variable name pointer; and
the obtaining module is further configured to: obtain the type of the first global variable based on the first global variable type pointer in the first pointer group; obtain the name of the first global variable based on the first global variable name pointer in the first pointer group, wherein the attribute information of the first global variable comprises the type and the name of the first global variable; obtain the type of the second global variable based on the second global variable type pointer in the second pointer group; and obtain the name of the second global variable based on the second global variable name pointer in the second pointer group, wherein the attribute information of the second global variable comprises the type and the name of the second global variable.

18. The apparatus according to claim 16 or 17, wherein the type of the first global variable and the type of the second global variable are basic types; and
the acquiring module is configured to use the first global variable as the second global variable.

19. The apparatus according to claim 18, wherein the first pointer group further comprises a first global variable address pointer, and the second pointer group further comprises a second global variable address pointer; and
the acquiring module is configured to: obtain a target heap memory pointer based on the first global variable address pointer, wherein the target heap memory pointer is used to obtain the first global variable; and enable the second global variable address pointer to indicate the target heap memory pointer.

20. The apparatus according to claim 16 or 17, wherein the type of the first global variable and the type of the second global variable are reference types; and
the acquiring module is configured to: when a first member variable is completely the same as a second member variable, update the first global variable based on the second metadata, to acquire an updated first global variable, wherein the first member variable is a member variable corresponding to the first global variable, and the second member variable is a member variable corresponding to the second global variable; and use the updated first global variable as the second global variable.

21. The apparatus according to claim 20, wherein the first pointer group comprises a first global variable address pointer, the first metadata comprises a third pointer group, the second pointer group comprises a second global variable address pointer, and the second metadata comprises a fourth pointer group; and
the acquiring module is configured to: obtain a target heap memory pointer based on the first global variable address pointer; obtain the first global variable based on the target heap memory pointer; enable a head pointer comprised in the first global variable to update from indicating the third pointer group to indicating the fourth pointer group; and enable the second global variable address pointer to indicate the target heap memory pointer.

22. The apparatus according to claim 16 or 17, wherein the type of the first global variable and the type of the second global variable are reference types; and
the acquiring module is configured to: when a first member variable is partially the same as a second member variable, generate a third global variable based on the second metadata, wherein the first member variable is a member variable corresponding to the first global variable, the second member variable is a member variable corresponding to the second global variable, a head pointer comprised in the third global variable indicates a fourth pointer group comprised in the second metadata, and the third global variable further comprises initial instance data of the second member variable; update, based on instance data of a target member variable comprised in the first global variable, initial instance data of the target member variable comprised in the third global variable, to acquire an updated third global variable, wherein the target member variable is a same member variable in the first member variable and the second member variable; and use the updated third global variable as the second global variable.

23. The apparatus according to any one of claims 20 to 22, wherein the first metadata comprises the third pointer group, the third pointer group comprises a first parent-type pointer and a first member variable pointer, the second metadata comprises the fourth pointer group, and the fourth pointer group comprises a second parent-type pointer and a second member variable pointer; and
the obtaining module is further configured to: obtain a type and a name of the first member variable based on the first parent-type pointer and the first member variable pointer in the third pointer group; obtain a type and a name of the second member variable based on the second parent-type pointer and the second member variable pointer in the fourth pointer group; and determine, based on the type and the name of the first member variable and the type and the name of the second member variable, that the first member variable is completely or partially the same as the second member variable.

24. The apparatus according to claim 22, wherein the acquiring module is configured to: when a first condition is met, update the initial instance data of the target member variable comprised in the third global variable to the instance data of the target member variable comprised in the first global variable, wherein the first condition comprises: a type of the first member variable and a type of the second member variable are basic types; or a type of the first member variable and a type of the second member variable are reference types, a first sub member variable is completely the same as a second sub member variable, the first sub member variable is a sub member variable of the target member variable comprised in the first member variable, and the second sub member variable is a sub member variable of the target member variable comprised in the second member variable.

25. The apparatus according to claim 22, wherein the acquiring module is configured to: when a second condition is met, update initial sub instance data, of a target sub member variable, comprised in the initial instance data of the target member variable to sub instance data, of the target sub member variable, comprised in the instance data of the target member variable, wherein the target sub member variable is a same sub member variable in a first sub member variable and a second sub member variable, the first sub member variable is a sub member variable of the target member variable comprised in the first member variable, and the second sub member variable is a sub member variable of the target member variable comprised in the second member variable; and the second condition comprises: a type of the first member variable and a type of the second member variable are reference types, and the first sub member variable is partially the same as the second sub member variable.

26. The apparatus according to any one of claims 22, 24, and 25, wherein the acquiring module is configured to enable a second global variable address pointer to indicate a reference heap memory pointer, wherein the reference heap memory pointer is used to obtain the updated third global variable.

27. The apparatus according to any one of claims 15 to 26, wherein the apparatus further comprises:
a modification module, configured to: when there is third code referencing a first symbol comprised in the first code, modify a pointer, of the first symbol, that is recorded in a global offset GOT table corresponding to the third code to a pointer of a second symbol comprised in the second code, wherein the first symbol comprises the first global variable, the second symbol comprises the second global variable, and the first global variable and the second global variable have a same type and name; and/or the first symbol comprises a first function, the second symbol comprises a second function, and the first function and the second function are a same function.

28. The apparatus according to any one of claims 15 to 27, wherein the apparatus further comprises:
a deletion module, configured to delete the first global variable that does not need to be used after the second global variable is acquired, and/or delete the first code and the first metadata.

29. An application update device, wherein the device comprises a memory and a processor, the memory stores at least one instruction, and the at least one instruction is loaded and executed by the processor, so that the application update device implements the application update method according to any one of claims 1 to 14.

30. A computer-readable storage medium, wherein the computer-readable storage medium stores at least one instruction, and the instruction is loaded and executed by a processor, so that the application update method according to any one of claims 1 to 14 is implemented.

31. A computer program product, wherein the computer program product comprises a computer program/instructions, and the computer program/the instructions are executed by a processor, so that a computer implements the application update method according to any one of claims 1 to 14.
